# EUROPEAN PATENT SPECIFICATION

(11) **EP 4 274 324 B1**
(45) Date of publication and mention of the grant of the patent: **09.12.2026**
(21) Application number: 21914699.0
(22) Date of filing: 31.12.2021
(51) Int. Cl.: H04W 56/00, H04W 74/08, H04L 5/00, H04L 27/26, H04W 74/0833

(54) **RA-RNTI PROCESSING METHOD AND APPARATUS, AND TERMINAL AND READABLE STORAGE MEDIUM**
RA-RNTI-VERARBEITUNGSVERFAHREN UND -VORRICHTUNG SOWIE ENDGERÄT UND LESBARES SPEICHERMEDIUM
PROCÉDÉ ET APPAREIL DE TRAITEMENT RA-RNTI, TERMINAL ET SUPPORT DE STOCKAGE LISIBLE

(30) Priority: 31.12.2020 CN 202011629341
(43) Date of publication of application: 08.11.2023
(73) Proprietor: Vivo Mobile Communication Co., Ltd., Dongguan, Guangdong 523863 (CN)
(72) Inventor: LI, Ping, Dongguan, Guangdong 523863 (CN); MO, Yitao, Dongguan, Guangdong 523863 (CN); LI, Gen, Dongguan, Guangdong 523863 (CN); LIU, Siqi, Dongguan, Guangdong 523863 (CN)
(74) Representative: Murgitroyd & Company
(86) International application number: PCT/CN2021/143505
(87) International publication number: WO 2022/143970

(56) References cited:
- CN-A- 108 738 134
- CN-A- 109 997 405
- CN-A- 111 478 757
- US-A1- 2019 116 613
- MEDIATEK INC: "Extended ra-ResponseWindow and RA-RNTI calculation", vol. RAN WG2, no. Prague, Czech Republic; 20190826 - 20190830, 15 August 2019 (2019-08-15), XP051767865, Retrieved from the Internet <URL:http://www.3gpp.org/ftp/tsg_ran/WG2_RL2/TSGR2_107/Docs/R2-1910080.zip> [retrieved on 20190815]
- "3rd Generation Partnership Project; Technical Specification Group Radio Access Network; NR; Medium Access Control (MAC) protocol specification (Release 16)", 5 October 2020 (2020-10-05), XP052353454, Retrieved from the Internet <URL:https://ftp.3gpp.org/tsg_ran/WG2_RL2/Specifications/202009_final_specs_after_RAN_89/38321-g21.zip 38321-g21.docx> [retrieved on 20201005]
- ERICSSON: "Remaining issues for RA-RNTI formula", vol. RAN WG2, no. Athens, Greece; 20180226 - 20180302, 15 February 2018 (2018-02-15), XP051399959, Retrieved from the Internet <URL:http://www.3gpp.org/ftp/tsg%5Fran/WG2%5FRL2/TSGR2%5F101/Docs/> [retrieved on 20180215]

## Description

### TECHNICAL FIELD

This application pertains to the field of wireless communications technologies, and in particular, relates to an RA-RNTI processing method and a terminal.

### BACKGROUND

In most communications systems, timing synchronization needs to be established between a transmit end and a receive end. User equipment (User Equipment, UE) may establish a connection to a cell through a random access process, and obtain uplink synchronization. In new radio (New Radio, NR), the UE selects a random preamble for a random access channel (Random Access Channel, RACH) process to obtain uplink synchronization. Transmission of each preamble is associated with a random access-radio network temporary identity (Random Access-Radio Network Temporary Identity, RA-RNTI).

The RA-RNTI may represent a time-frequency resource used when a message 1 (Msg1) is sent. When sending the Msg1, the UE calculates an RA-RNTI and stores the RA-RNTI. After receiving the Msg1, an NR node (NR Node B, gNB) also calculates an RA-RNTI, and uses the RA-RNTI to scramble a cyclic redundancy check (Cyclic Redundancy Check, CRC) of a downlink control information (Downlink Control Information, DCI) format 1_0 (format 1_0) of a physical downlink control channel (Physical Downlink Control Channel, PDCCH) of a message 2 (Msg2). Therefore, only the terminal that sends the Msg1 on the time-frequency resource identified by the RA-RNTI can correctly decode the DCI of the PDCCH.

At present, an existing calculation formula is applicable to a 15/30/60/120 KHz subcarrier spacing (Subcarrier Spacing, SCS) of a physical random access channel (Physical Random Access Channel, PRACH). If the existing calculation formula is used in a communications system supporting a higher PRACH SCS, RA-RNTIs may overflow or a same RA-RNTI may be obtained through calculation for different time-frequency resources. When different UEs send the msg1 on these time-frequency resources by using a same preamble index (Preamble index), the UE does not know which random access response (Random Access Response, RAR) is its own and needs to resolve a conflict by using a contention resolution mechanism. In the above two cases, access efficiency is decreased.

MediaTek Inc; "Extended RA-ResponseWindow and RA-RNTI calculation", 3GPP TSG-RAN WG2 Meeting #107 Prague, Czech Republic, 26th-30th August 2019, R2-1910080/XP051767865 discloses that the RA-RNTI associated with the PRACH in which the Random Access Preamble is transmitted, is computed as: RA-RNTI=1+s_id+14×t_id+14×80×f_id+14×80×8×ul_carrier_id.

3GPP; Technical Specification Group Radio Access Network; NR; Medium Access Control (MAC) protocol specification; XP052353454 discloses that t_id is the index of the first slot of the specified PRACH occasion in a system frame (0<t_id<80).

ERICSSON: "Remaining issues for RA-RNTI formula", 3GPP DRAFT; R2-1803201/XP051399959 discloses that t_id is the index of the first slot of the specified PRACH in a system frame.

### SUMMARY

Embodiments of this application provide an RA-RNTI processing method and apparatus, a terminal, and a readable storage medium, to resolve a problem that in a case that a PRACH SCS exceeds 120 KHz, an existing calculation formula is used to for calculation to obtain a same RA-RNTI for different time-frequency resources, resulting in a decrease in access efficiency.

According to a first aspect, an RA-RNTI processing method is provided and defined in claim 1.

According to a second aspect, a terminal is provided and defined in claim 11.

Further advantageous embodiments of the present application are indicated in the dependent claims. It is to be understood that both the foregoing general description and the following detailed description are exemplary only, are not restrictive of the present disclosure.

### BRIEF DESCRIPTION OF DRAWINGS

FIG. 1 is a structural diagram of a wireless communications system to which embodiments of this application can be applied;
FIG. 2 is a first schematic flowchart of an RA-RNTI processing method according to an embodiment of this application;
FIG. 3 is a schematic diagram of partial RO mapping in a reference slot according to an embodiment of this application;
FIG. 4 is a schematic diagram of partial RO mapping in a slot group according to an embodiment of this application;
FIG. 5 is a schematic diagram of grouping of slots according to an embodiment of this application;
FIG. 6 is a first schematic structural diagram of an RA-RNTI processing apparatus according to an embodiment of this application;
FIG. 7 is a second schematic flowchart of an RA-RNTI processing method according to an embodiment of this application;
FIG. 8 is a second schematic structural diagram of an RA-RNTI processing apparatus according to an embodiment of this application;
FIG. 9 is a schematic structural diagram of a communications device according to an embodiment of this application; and
FIG. 10 is a schematic structural diagram of hardware of a terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope defined by the appended claims of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communications system.

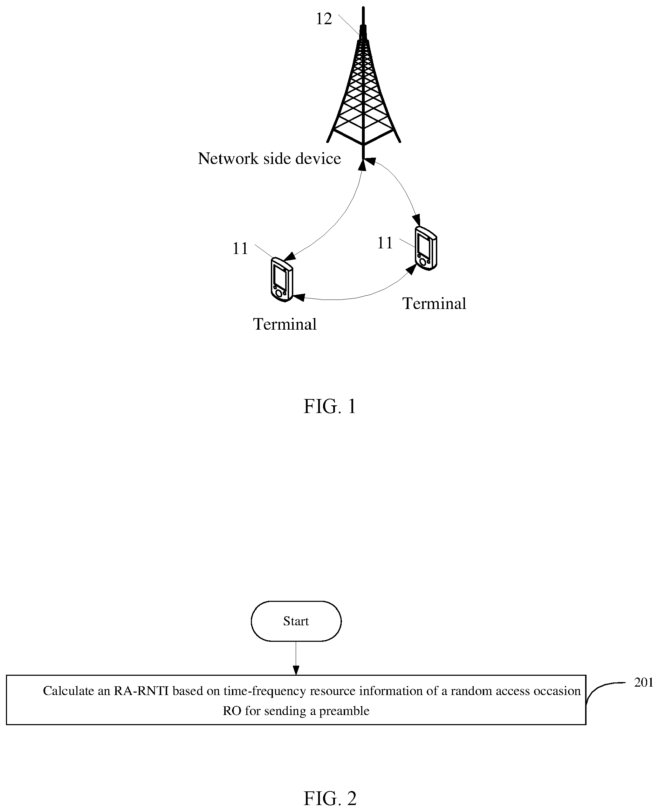

FIG. 1 is a structural diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In an existing communications system, an RA-RNTI associated with a PRACH for sending a random access preamble is calculated by using the following formula: $RA - RNTI = 1 + s_id + 14 \times t_id + 14 \times 80 \times f_id + 14 \times 80 \times 8 \times ul_carrier_id ,$ where
s_id is a number (0≤s_id<14) of a start orthogonal frequency division multiplexing (Orthogonal Frequency Division Multiplexing, OFDM) symbol of the RO occupied for sending the preamble;
t_id is a 1st slot number of the RO occupied for sending the preamble in a system frame, where the slot number is obtained through numbering based on a PRACH slot subcarrier spacing;
f_id is a number (0≤f_id<8) of the RO occupied for sending the preamble in frequency domain; and
ul_carrier _id represents an uplink carrier used for transmitting a random access preamble ('0' represents a normal uplink carrier, and '1' represents an auxiliary uplink carrier).

The foregoing calculation formula is applicable to the current PRACH SCS of 15/30/60/120 KHz. If the foregoing calculation formula is used in a communications system supporting a higher PRACH SCS, different time-frequency resource may be used to obtain a same RA-RNTI through calculation. When different UEs send a msg1 on these time-frequency resources by using a same preamble index, the UE does not know which RAR is its own and needs to resolve a conflict by using a contention resolution mechanism. If an updated RA-RNTI calculation formula is used according to the definitions, RA-RNTIs may overflow, and access efficiency is decreased in the above two cases.

Based on this, with reference to the accompanying drawings, an RA-RNTI processing method and apparatus, a terminal, and a readable storage medium provided in the embodiments of this application are described in detail by using specific embodiments and application scenarios.

FIG. 2 is a first schematic flowchart of an RA-RNTI processing method according to an embodiment of this application.

As shown in FIG. 2, the method includes the following steps.

Step 201: Calculate an RA-RNTI based on time-frequency resource information of a random access occasion RO for sending a preamble.

The calculating an RA-RNTI based on time-frequency resource information of a random access occasion RO for sending a preamble includes:
calculating the RA-RNTI based on a parameter t_id, where
t_id is a slot number of a 1st slot of the RO occupied for sending the preamble within a first specified time length, or a number of a 1st slot group of the RO occupied for sending the preamble, or a number of a 1st PRACH slot of the RO occupied for sending the preamble in a slot group.

Specifically, in a process of sending the preamble to obtain uplink synchronization, UE calculates and stores the RA-RNTI based on the time-frequency resource information of the random access occasion RO for sending the preamble, to determine a corresponding random access response RAR message based on the RA-RNTI. The RA-RNTI is calculated based on the parameter t_id, where t_id is the slot number of the 1st slot of the RO occupied for sending the preamble within the first specified time length, or the number of the 1st slot group of the RO occupied for sending the preamble, or the number of the 1st PRACH slot of the RO occupied for sending the preamble in the slot group. Therefore, the RA-RNTI calculated based on t_id can avoid a problem that access efficiency decreases in a case that a PRACH SCS exceeds 120 KHz. It can be understood that, in addition to the parameter t_id, the calculation of the RA-RNTI in this embodiment of this application may further include another parameter corresponding to the time-frequency resource information of the random access occasion RO for sending the preamble. This is not specifically limited in this embodiment of this application.

According to the RA-RNTI processing method provided in this embodiment of this application, an RA-RNTI is calculated based on a slot number of a 1st slot of an RO occupied for sending a preamble within a first specified time length, or a number of a 1st slot group of an RO occupied for sending a preamble, or a number of a 1st PRACH slot of an RO occupied for sending a preamble in a slot group. Therefore, problems that RA-RNTIs overflow and access efficiency decreases when a PRACH SCS exceeds 120 KHz can be avoided.

Based on the foregoing embodiment, the slot number is obtained through numbering based on a reference slot subcarrier spacing or a physical random access channel PRACH slot subcarrier spacing; and
the slot group is obtained by grouping slots within the first specified time length according to a specific rule.

Specifically, t_id is the slot number of the 1st slot of the RO occupied for sending the preamble within the first specified time length, and the slot number is obtained through numbering based on the reference slot subcarrier spacing; or is the slot number of the 1st slot of the RO occupied for sending the preamble within the first specified time length, and the slot number is obtained through numbering based on the physical random access channel PRACH slot subcarrier spacing; or is a number of a 1st slot group of the RO occupied for sending the preamble in N slot groups that are obtained by grouping slots within the first specified time length according to a specific rule; or is a number of a 1st PRACH slot of the RO occupied for sending the preamble in a slot group in N slot groups that are obtained by grouping slots within the first specified time length according to a specific rule. The RA-RNTI is obtained through calculation based on the foregoing defined t_id, so that a problem that access efficiency decreases in a case that a PRACH SCS exceeds 120 KHz can be further avoided.

According to the RA-RNTI processing method provided in this embodiment of this application, the slot number is obtained through numbering based on the reference slot subcarrier spacing or the physical random access channel PRACH slot subcarrier spacing, and the slot group is obtained by grouping the slots within the first specified time length according to the specific rule. Therefore, in a case that RA-RNTIs corresponding to different time-frequency resources are the same or RA-RNTIs overflow, a problem that access efficiency decreases when a PRACH SCS exceeds 120 KHz can be avoided.

Based on the foregoing embodiment, after the calculating an RA-RNTI based on time-frequency resource information of a random access occasion RO for sending a preamble, the method further includes:
during running of a random access response RAR window, monitoring a physical downlink control channel PDCCH scrambled based on the RA-RNTI.

Specifically, after sending the preamble, the UE monitors, during running of the random access response RAR window, the physical downlink control channel PDCCH scrambled based on the RA-RNTI. Because the UE has calculated the RA-RNTI, the UE may obtain, during running of the random access response RAR window, the physical downlink control channel PDCCH scrambled based on the RA-RNTI.

A random access response RAR message is received according to downlink control information DCI in the PDCCH.

Specifically, the UE may determine the corresponding random access response RAR message according to the downlink control information DCI in the PDCCH and the RA-RNTI. According to the RA-RNTI processing method provided in this embodiment of this application, after the RA-RNTI is calculated based on the time-frequency resource information of the random access occasion RO for sending the preamble, the physical downlink control channel PDCCH scrambled based on the RA-RNTI is monitored during running of the random access response RAR window, and the random access response RAR message is received according to the downlink control information DCI in the PDCCH, so that the UE can accurately determine the corresponding RAR message based on the RA-RNTI.

Based on the foregoing embodiment, the calculating the RA-RNTI based on a parameter t_id includes:
obtaining the RA-RNTI through calculation according to the following formula: $RA - RNTI = 1 \times A 1 + s_id \times A 2 + Symbol \times t_id \times A 3 + Symbol \times X \times f_id \times A 4$ (1) where
t_id is a slot number of a 1st slot of the RO occupied for sending the preamble within a first specified time length, the slot number is obtained through numbering based on a PRACH slot subcarrier spacing, and the first specified time length is at least one slot, at least one millisecond, at least one subframe, at least one time domain length of an RO, at least one frame, or at least one time window;
X is configured by a network side, or X is a preset value, or X is determined by the terminal, or X is a total quantity of slots included in the first specified time length;
s_id is a number of a start orthogonal frequency division multiplexing OFDM symbol of the RO occupied for sending the preamble;
f_id is a number of the RO occupied for sending the preamble in frequency domain;
Symbol is a quantity of symbols within a second specified time length, and the second specified time length is at least one slot, at least one millisecond, at least one subframe, at least one time domain length of an RO, at least one frame, or at least one time window; and
A1, A2, A3, and A4 are integers.

Specifically, a maximum supported PRACH subcarrier spacing in NR is 120 KHz. It is assumed that within a 52.6-71 GHz band range, a maximum supported PRACH subcarrier spacing is 480 KHz, and an uplink auxiliary carrier is not introduced. Assuming that a PRACH subcarrier spacing is 480 KHz, the RA-RNTI may be calculated by using the foregoing formula (1): $RA - RNTI = 1 \times A 1 + s_id \times A 2 + Symbol \times t_id \times A 3 + Symbol \times X \times f_id \times A 4 .$

In the formula, s_id represents the number of the start OFDM symbol of the RO occupied for sending the preamble, and a value range thereof is 0≤s_id≤14; t_id represents a slot number of a 1st slot of the RO occupied for sending the preamble in a maximum RAR window time/system frame, the slot number is obtained through numbering based on a PRACH slot subcarrier spacing, and a value range is 0≤t_id<320; and X represents a quantity of slots within the maximum RAR window time/system frame, and a value thereof is 320.

In actual application, the UE selects the RO to send the preamble, calculates the RA-RNTI according to the sending RO, and in a configured CORESET/search space in a corresponding RAR window (window), monitors the PUCCH scrambled by the RA-RNTI. If the DCI of the PUCCH scrambled by the RA-RNTI that is obtained through calculation is monitored, the UE continues to receive the corresponding PDSCH; otherwise, continues to perform monitoring in the RAR window.

According to the RA-RNTI processing method provided in this embodiment of this application, the RA-RNTI is calculated based on the formula RA-RNTI=1×A1+s_id×A2+Symbol×t_id×A3+Symbol×X×f_id×A4, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula:$RA - RNTI = 1 \times B 1 + s_id \times B 2 + Symbol \times t_id \times B 3 + Symbol \times X \times f_id \times B 4 + Symbol \times X \times Y \times ul_carrier_id \times B 5$ (2), where
t_id is a slot number of a 1st slot of the RO occupied for sending the preamble within a first specified time length, the slot number is obtained through numbering based on a reference slot subcarrier spacing, and the first specified time length is at least one slot, at least one millisecond, at least one subframe, at least one time domain length of an RO, at least one frame, or at least one time window;
X is configured by a network side, or X is a preset value, or X is determined by the terminal, or X is a total quantity of reference slots included in the first specified time length;
Y is configured by the network side, or Y is a preset value, or Y is determined by the terminal, or Y is a quantity of ROs for performing frequency division multiplexing (Frequency Division Multiplexing, FDM) on a PRACH resource;
s_id is a number of a start orthogonal frequency division multiplexing OFDM symbol of the RO occupied for sending the preamble;
f_id is a number of the RO occupied for sending the preamble in frequency domain;
Symbol is a quantity of symbols within a second specified time length, and the second specified time length is at least one slot, at least one millisecond, at least one subframe, at least one time domain length of an RO, at least one frame, or at least one time window; and
ul_carrier_id is configured by the network side, or ul_carrier_id is a preset value, or ul_carrier_id is determined by the terminal, or ul_carrier_id is an uplink carrier number used for sending the preamble; and
B1, B2, B3, B4, and B5 are integers.

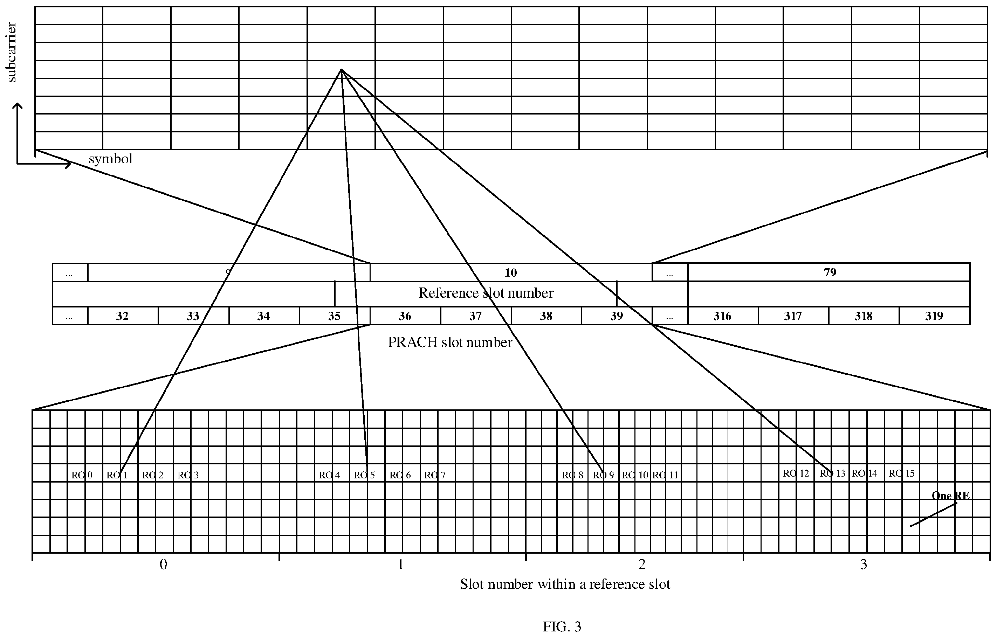

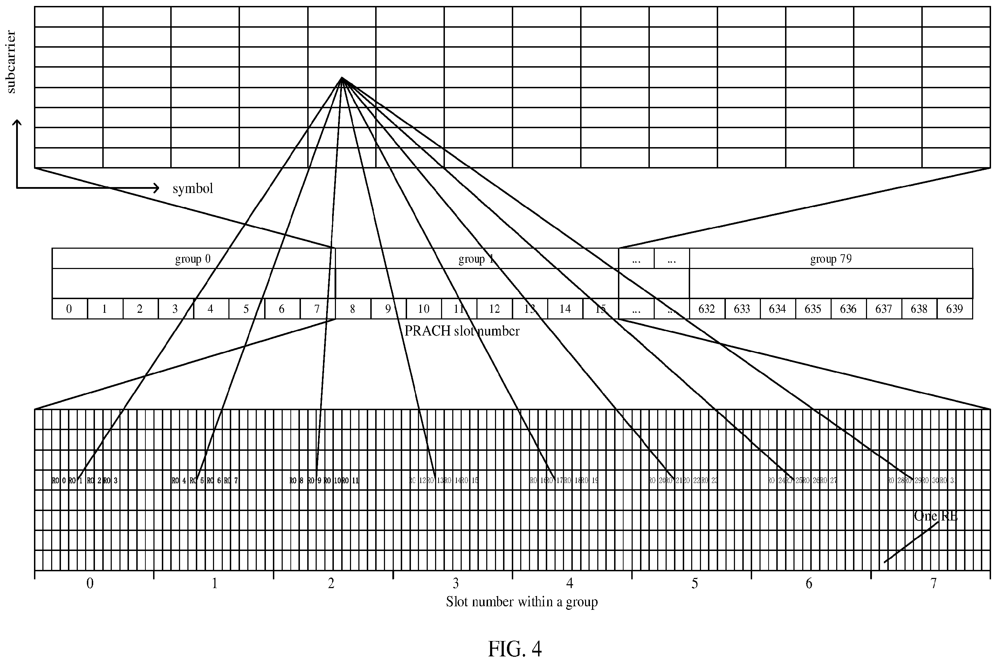

Specifically, FIG. 3 is a schematic diagram of partial RO mapping in a reference slot according to an embodiment of this application. As shown in FIG. 3, it is assumed that four UEs may randomly select one of 16 ROs on a time-frequency resource in FIG. 4 to send a preamble, where an SCS of a PRACH is 480 KHz, and an SCS of the reference slot is 120 KHz. Therefore, four PRACH slots are included in one reference slot. (It is assumed that a normal uplink carrier is used, ul_carrier_id=0, Symbol is 14, and B1 to B5 are all 1).

The RA-RNTI may be calculated by using the foregoing formula (2): $\begin{matrix}RA - RNTI = 1 \times B 1 + s_id \times B 2 + Symbol \times t_id \times B 3 + Symbol \times X \times f_id \times B 4 + Symbol \times X \times Y \times ul_carrier_id \times B 5 \\ = 1 + s_id + 14 \times t_id + 14 \times 80 \times f_id + 14 \times 80 \times 8 \times ul_carrier_id .\end{matrix}$

According to the RA-RNTI processing method provided in this embodiment of this application, the RA-RNTI is calculated based on the formula RA-RNTI=1×B1+s_id×B2+Symbol×t_id×B3+Symbol×X×f_id×B4+Symbol×X×Y×ul_carrier_id×B5, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula: $\begin{matrix}RA - RNTI = Mod \\ \left(1\times C1+s_id\times C2+Symbol\times t_id\times C3+Symbol\times X\times f_id\times C4+Symbol\times X\times Y\times ul_carrier_id\times C5,A\right)\end{matrix}$ (3) where
t_id is a slot number of a 1st slot of the RO occupied for sending the preamble within a first specified time length, the slot number is obtained through numbering based on a PRACH slot subcarrier spacing, and the first specified time length is at least one slot, at least one millisecond, at least one subframe, at least one time domain length of an RO, at least one frame, or at least one time window;
X is configured by a network side, or X is a preset value, or X is a total quantity of slots included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window;
C1, C2, C3, C4, C5 are integers; and

A is configured by the network side, or A is a preset value, or A is determined by the terminal.

Specifically, it is assumed that three UEs may randomly select one of valid ROs on a time-frequency resource to send a preamble, where an SCS of a PRACH is 960 KHz. (It is assumed that a normal uplink carrier is used, ul_carrier_id=0, Symbol is 14, C1 to C5 are all 1, and A=65522).

The RA-RNTI may be calculated by using formula (3): $\begin{matrix}RA - RNTI = Mod \\ \left(1\times C1+s_id\times C2+Symbol\times t_id\times C3+Symbol\times X\times f_id\times C4+Symbol\times X\times Y\times ul_carrier_id\times C5,A\right) = Mod \\ \left(1+s_id+14\times t_id+14\times 640\times f_id+14\times 640\times 8\times ul_carrier_id,65522\right) .\end{matrix}$

According to the RA-RNTI processing method provided in this embodiment of this application, the RA-RNTI is calculated based on the formula RA-RNTI=Mod (1×C1+s_id×C2+Symbol×t_id×C3+Symbol×X×f_id×C4+Symbol×X×Y×ul_carrier_id×C5, A), so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula: $RA - RNTI = 1 \times D 1 + s_id \times D 2 + Symbol \times t_id \times D 3 + Symbol \times X \times f_id \times D 4 + Symbol \times X \times Y \times slot_id \times D 5$ (4) where
t_id is a slot number of a 1st slot of the RO occupied for sending the preamble within a first specified time length, the slot number is obtained through numbering based on a reference slot subcarrier spacing, and the first specified time length is at least one slot, at least one millisecond, at least one subframe, at least one time domain length of an RO, at least one frame, or at least one time window;
X is configured by a network side, or X is a preset value, or X is a total quantity of reference slots included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
slot_id is a number of a 1st PRACH slot of the RO occupied for sending the preamble in a reference slot;
Symbol is a quantity of symbols within a second specified time length, and the second specified time length is at least one slot, at least one millisecond, at least one subframe, at least one time domain length of an RO, at least one frame, or at least one time window; and
D1, D2, D3, D4, D5 are integers.

Specifically, it is assumed that in a 52.6-71 GHz band range, a maximum supported PRACH subcarrier spacing is 480 KHz, and an uplink auxiliary carrier is not introduced. Assuming that a PRACH subcarrier spacing is 480 KHz, and an SCS of a reference slot is 120 KHz (it is assumed that Symbol is 14, and D1 to D5 are all 1), the RA-RNTI may be calculated by using the foregoing formula (4): $\begin{matrix}RA - RNTI = 1 \times D 1 + s_id \times D 2 + Symbol \times t_id \times D 3 + Symbol \times X \times f_id \times D 4 + Symbol \times X \times Y \times slot_id \times D 5 \\ = 1 + s_id + 14 \times t_id + 14 \times 80 \times f_id + 14 \times 80 \times 8 \times slot_id\end{matrix}$

In the formula, s_id represents the number of the start OFDM symbol of the RO occupied for sending the preamble, and a value range thereof is 0≤s _id≤14; t_id represents a slot number of a 1st slot of the RO occupied for sending the preamble in a maximum RAR window time/system frame; X represents a total quantity of PRACH reference slots in the maximum RAR window time/system frame; Y represents a maximum quantity of ROs in FDM, and a value thereof is 8; and slot_id represents a number of a PRACH slot in a reference slot, and a value range thereof is 0≤slot_id<4.

In actual application, the UE selects the RO to send the preamble, calculates the RA-RNTI according to the sending RO, and in a configured CORESET/search space in a corresponding RAR window, monitors the PUCCH scrambled by the RA-RNTI. If the DCI of the PUCCH scrambled by the RA-RNTI that is obtained through calculation is monitored, the UE continues to receive the corresponding PDSCH; otherwise, continues to perform monitoring in the RAR window.

According to the RA-RNTI processing method provided in this embodiment of this application, the RA-RNTI is calculated based on the formula RA-RNTI=1×D1+s_id×D2+Symbol×t_id×D3+Symbol×X×f_id×D4+Symbol×X×Y×slot_id×D5, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula: $RA - RNTI = 1 \times E 1 + s_id \times E 2 + Symbol \times t_id \times E 3 + Symbol \times X \times f_id \times E 4 + Symbol \times X \times Y \times ul_carrier_id \times E 5$ (5) where
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window; and
E1, E2, E3, E4, and E5 are integers.

Specifically, FIG. 4 is a schematic diagram of partial RO mapping in a slot group according to an embodiment of this application. As shown in FIG. 4, it is assumed that four UEs may randomly select one of 32 ROs on a time-frequency resource in FIG. 4 to send a preamble, where an SCS of a PRACH is 960 KHz, slots in a maximum RAR window time/system frame are grouped into 80 groups, and each group has 8 slots. (It is assumed that a normal uplink carrier is used, ul_carrier_id=0, Symbol is 14, and E1 to E5 are 1).

The RA-RNTI may be calculated by using the foregoing formula (5): 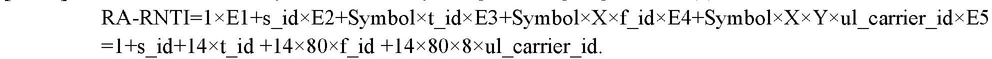 RA-RNTI=1×E1+s_id×E2+Symbol×t_id×E3+Symbol×X×f_id×E4+Symbol×X×Y×ul_carrier_id×E5 =1+s_id+14×t_id +14×80×f_id +14×80×8×ul_carrier_id.

According to the RA-RNTI processing method provided in this embodiment of this application, the RA-RNTI is calculated based on the formula RA-RNTI=1×E1+s_id×E2+Symbol×t_id×E3+Symbol×X×f_id×E4+Symbol×X×Y×ul_carrier_id×E5, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula: $RA - RNTI = 1 \times F 1 + s_id \times F 2 + Symbol \times t_id \times F 3 + Symbol \times X \times f_id \times F 4 + Symbol \times X \times Y \times slot_id \times F 5$ (6) where
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
slot_id is a number of a 1st PRACH slot of the RO occupied for sending the preamble in a slot group;
Symbol is a quantity of symbols within a second specified time length, and the second specified time length is at least one slot, at least one millisecond, at least one subframe, at least one time domain length of an RO, at least one frame, or at least one time window; and
F1, F2, F3, F4, and F5 are integers.

Specifically, it is assumed that within a 52.6-71 GHz band, a maximum supported PRACH subcarrier spacing is 480 KHz, and an uplink auxiliary carrier is not introduced. Assuming that a PRACH subcarrier spacing is 480 KHz, slots in a maximum RAR window time/system frame are grouped into 80 groups, and each group has four PRACH slots (assuming that Symbol is 14, and F1 to F5 are 1), the RA-RNTI is calculated by using the foregoing formula (6): $\begin{matrix}RA - RNTI = 1 \times F 1 + s_id \times F 2 + Symbol \times t_id \times F 3 + Symbol \times X \times f_id \times F 4 + Symbol \times X \times Y \times slot_id \times F 5 \\ = 1 + s_id + 14 \times t_id + 14 \times 80 \times f_id + 14 \times 80 \times Y \times slot_id\end{matrix}$

In the formula, s_id represents the number of the start OFDM symbol of the RO occupied for sending the preamble, and a value range thereof is 0≤s_id≤14; t_id represents a number of a 1st slot group of the RO occupied for sending the preamble in N slot groups that are obtained by grouping slots within an RAR window time according to a specific rule; X represents a quantity of groups within a maximum RAR window time/system frame, and a value thereof is 80; Y represents a maximum quantity of ROs in FDM, and a value thereof is 8; and slot_id represents a number of a PRACH slot in a slot group, and a value range thereof is 0≤slot_id<4.

In actual application, the UE selects the RO to send the preamble, calculates the RA-RNTI according to the sending RO, and in a configured CORESET/search space in a corresponding RAR window, monitors the PUCCH scrambled by the RA-RNTI. If the DCI of the PUCCH scrambled by the RA-RNTI that is obtained through calculation is monitored, the UE continues to receive the corresponding PDSCH; otherwise, continues to perform monitoring in the RAR window.

According to the RA-RNTI processing method provided in this embodiment of this application, the RA-RNTI is calculated based on the formula RA-RNTI=1×F1+s_id×F2+Symbol×t_id×F3+Symbol×X×f_id×F4+Symbol×X×Y×slot_id×F5, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula:$RA - RNTI = 1 \times G 1 + s_id \times G 2 + Symbol \times t_id \times G 3 + Symbol \times X \times f_id \times G 4 + Symbol \times X \times Y \times ul_carrier_id \times G 5$ (7), where
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots included in one slot group;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window; and
G1, G2, G3, G4, and G5 are integers.

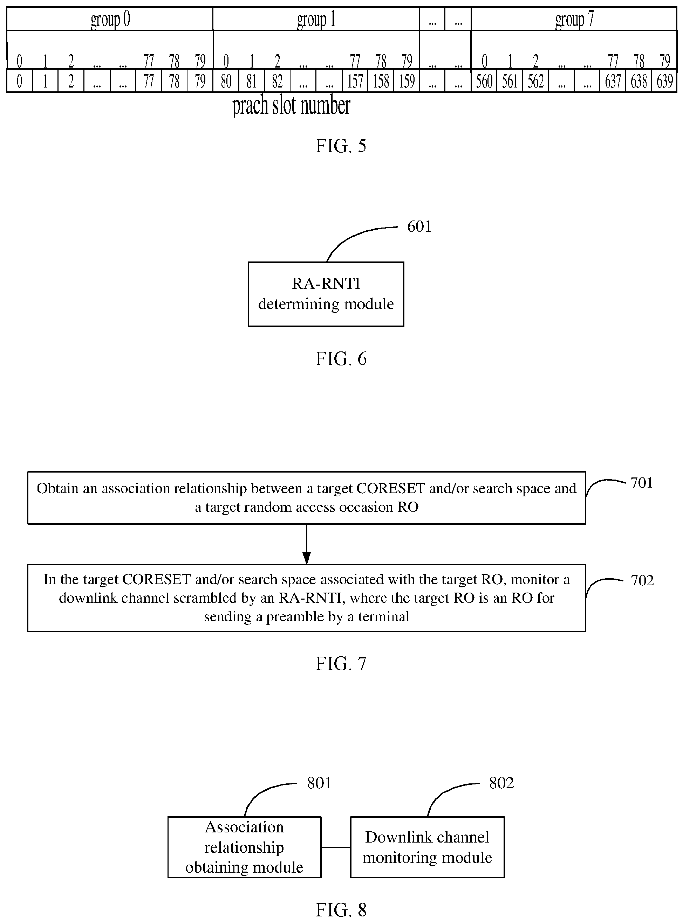

Specifically, FIG. 5 is a schematic diagram of grouping of slots according to an embodiment of this application. As shown in FIG. 5, it is assumed that four UEs may randomly select one of 32 ROs on a time-frequency resource below to send a preamble, where an SCS of a PRACH is 960 KHz, slots in a maximum RAR window time/system frame are grouped into 8 groups, and each group has 80 slots. (It is assumed that a normal uplink carrier is used, ul_carrier_id=0, Symbol is 14, and G1 to G5 are 1).

The RA-RNTI may be calculated by using formula (7): $\begin{matrix}RA - RNTI = 1 \times G 1 + s_id \times G 2 + Symbol \times t_id \times G 3 + Symbol \times X \times f_id \times G 4 + Symbol \times X \times Y \times ul_carrier_id \times G 5 \\ = 1 + s_id + 14 \times t_id + 14 \times 80 \times f_id + 14 \times 80 \times 8 \times ul_carrier_id .\end{matrix}$

According to the RA-RNTI processing method provided in this embodiment of this application, the RA-RNTI is calculated based on the formula RA-RNTI=1×G1+s_id×G2+Symbol×t_id×G3+Symbol×X×f_id×G4+Symbol×X×Y×ul_carrier_id×G5, so that a problem that access efficiency decreases in a case that a PRACH SCS exceeds 120 KHz can be avoided.

Based on the foregoing embodiment, the calculating the RA-RNTI based on a parameter t_id includes:
obtaining the RA-RNTI through calculation according to the following formula: $RA - RNTI = 1 \times H 1 + s_id \times H 2 + Symbol \times t_id \times H 3 + Symbol \times X \times f_id \times H 4 + Symbol \times X \times Y \times group_id \times H 5$ (8) where
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots included in one slot group;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
group _id is a number of a 1st slot group of the RO occupied for sending the preamble;
Symbol is a quantity of symbols within a second specified time length, and the second specified time length is at least one slot, at least one millisecond, at least one subframe, at least one time domain length of an RO, at least one frame, or at least one time window; and
H1, H2, H3, H4, and H5 are integers.

Specifically, it is assumed that within a 52.6-71 GHz band, a maximum supported PRACH subcarrier spacing is 480 KHz, and an uplink auxiliary carrier is not introduced. Assuming that a PRACH subcarrier spacing is 480 KHz, slots in a maximum RAR window time/system frame are grouped into 4 groups, and each group has 80 PRACH slots, the RA-RNTI is calculated by using the foregoing formula (8): $\begin{matrix}RA - RNTI = 1 \times H 1 + s_id \times H 2 + Symbol \times t_id \times H 3 + Symbol \times X \times f_id \times H 4 + Symbol \times X \times Y \times group_id \times H 5 \\ = 1 + s_id + 14 \times t_id + 14 \times 80 \times f_id + 14 \times 80 \times Y \times group_id\end{matrix}$

In the formula, s_id represents the number of the start OFDM symbol of the RO occupied for sending the preamble, and a value range thereof is 0≤s_id≤14; t_id represents a number of a 1st PRACH slot of the RO occupied for sending the preamble in a slot group in N slot groups that are obtained by grouping slots within a maximum RAR window time/system frame according to a specific rule; X represents a quantity of slot in a slot group, and a value thereof is 80; Y represents a maximum quantity of ROs in FDM, and a value thereof is 8; and group _id represents a number of a 1st slot group of the RO occupied for sending the preamble, and a value range thereof is 0≤group_id<4.

In actual application, the UE selects the RO to send the preamble, calculates the RA-RNTI according to the sending RO, and in a configured CORESET/search space in a corresponding RAR window, monitors the PUCCH scrambled by the RA-RNTI. If the DCI of the PUCCH scrambled by the RA-RNTI that is obtained through calculation is monitored, the UE continues to receive the corresponding PDSCH; otherwise, continues to perform monitoring in the RAR window.

According to the RA-RNTI processing method provided in this embodiment of this application, the RA-RNTI is calculated based on the formula RA-RNTI=1×H1+s_id×H2+Symbol×t_id×H3+Symbol×X×f_id×H4+Symbol×X×Y×group_id×H5, so that a problem that access efficiency decreases in a case that a PRACH SCS exceeds 120 KHz can be avoided.

Based on the foregoing embodiment, the receiving a random access response RAR message according to downlink control information DCI in the PDCCH includes:
receiving the random access response RAR message based on a first indication sent by a network side device, where the first indication indicates a number of a 1st PRACH slot of the RO occupied for sending the preamble in a reference slot.

Specifically, in a case that the RA-RNTI is calculated by using the formula (1), as shown in FIG. 3, 2-bit DCI is required to respectively indicate PRACH slots 0, 1, 2, 3 in a reference slot.

UE 1 sends a PRACH on an RO 1 in the PRACH slot 0 in a reference slot 10, and the UE 1 calculates the RA-RNTI according to the RO 1: $RA - RNTI = 1 + 4 + 14 \times 10 + 14 \times 80 \times 4 + 14 \times 80 \times 8 \times 0 = 4625 ;$ and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

UE 2 sends a PRACH on an RO 3 in the PRACH slot 0 in the reference slot 10, and the UE 2 calculates the RA-RNTI according to the RO 3: $RA - RNT 2 = 1 + 8 + 14 \times 10 + 14 \times 80 \times 4 + 14 \times 80 \times 8 \times 0 = 4629 ;$ and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

UE 3 sends a PRACH on an RO 5 in the PRACH slot 1 in the reference slot 10, and the UE 3 calculates the RA-RNTI according to the RO5: $RA - RNT 3 = 1 + 4 + 14 \times 10 + 14 \times 80 \times 4 + 14 \times 80 \times 8 \times 0 = 4625 ;$ and
in a configured CORESET/search space in a corresponding RAR window, monitor DCI of the PDCCH scrambled by the RA-RNTI obtained through calculation, check whether a first indication field in the DCI is 1, and if the first indication field is 1, continue to receive the PDSCH and decode the PDSCH; otherwise, continue to perform monitoring in the RAR window.

UE 4 sends a PRACH on an RO 13 in the PRACH slot 3 in the reference slot 10, and the UE 4 calculates the RA-RNTI according to the RO 13: $RA - RNT 4 = 1 + 4 + 14 \times 10 + 14 \times 80 \times 4 + 14 \times 80 \times 8 \times 0 = 4625 ;$ and
in a configured CORESET/search space in a corresponding RAR window, monitor DCI of the PDCCH scrambled by the RA-RNTI obtained through calculation, check whether a first indication field in the DCI is 3, and if the first indication field is 3, continue to receive the PDSCH and decode the PDSCH; otherwise, continue to perform monitoring in the RAR window.

It can be learned from the foregoing examples that, even if a same RA-RNTI is obtained through calculation for different time-frequency resources, the UE may perform distinguishing by using the number that is of the 1st PRACH slot of the RO occupied for sending the preamble in the reference slot and that is indicated by the first indication, thereby avoiding a problem that access efficiency decreases.

According to the RA-RNTI processing method provided in this embodiment of this application, the random access response RAR message is received based on the first indication sent by the network side device, where the first indication indicates the number of the 1st PRACH slot of the RO occupied for sending the preamble in the reference slot. Therefore, a problem that access efficiency decreases in a case that a PRACH SCS exceeds 120 KHz can be avoided.

Based on the foregoing embodiment, the receiving a random access response RAR message according to downlink control information DCI in the PDCCH includes:
receiving the random access response RAR message based on a first indication sent by a network side device, where the first indication indicates a number of a 1st PRACH slot of the RO occupied for sending the preamble in a slot group.

Specifically, in a case that the RA-RNTI is calculated by using the formula (5), as shown in FIG. 4, 3-bit DCI is required to respectively indicate PRACH slots 0, 1, 2, 3, 4, 5, 6, 7 in a slot group.

UE 1 sends a PRACH on an RO 1 in the PRACH slot 0 in a slot group 1, and the UE 1 calculates the RA-RNTI according to the RO 1: $RA - RNT 1 = 1 + 4 + 14 \times 1 + 14 \times 80 \times 4 + 14 \times 80 \times 8 \times 0 = 4499 ;$ and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

UE 2 sends a PRACH on an RO 3 in the PRACH slot 0 in the slot group 1, and the UE 2 calculates the RA-RNTI according to the RO 3: $RA - RNT 2 = 1 + 8 + 14 \times 1 + 14 \times 80 \times 4 + 14 \times 80 \times 8 \times 0 = 4503 ;$ and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

UE 3 sends a PRACH on an RO 5 in the PRACH slot 1 in the slot group 1, and the UE 3 calculates the RA-RNTI according to the RO 5: $RA - RNT 3 = 1 + 4 + 14 \times 1 + 14 \times 80 \times 4 + 14 \times 80 \times 8 \times 0 = 4499 ;$ and
in a configured CORESET/search space in a corresponding RAR window, monitors DCI of the PDCCH scrambled by the RA-RNTI obtained through calculation, checks whether a first indication field in the DCI is 1, and if the first indication field is 1, continues to receive the PDSCH and decode the PDSCH; otherwise, continues to perform monitoring in the RAR window.

UE 4 sends a PRACH on an RO 13 in the PRACH slot 3 in the slot group 1, and the UE 4 calculates the RA-RNTI according to the RO 13: $RA - RNT 4 = 1 + 4 + 14 \times 1 + 14 \times 80 \times 4 + 14 \times 80 \times 8 \times 0 = 4499 ;$ ; and
in a configured CORESET/search space in a corresponding RAR window, monitor DCI of the PDCCH scrambled by the RA-RNTI obtained through calculation, check whether a first indication field in the DCI is 3, and if the first indication field is 3, continue to receive the PDSCH and decode the PDSCH; otherwise, continue to perform monitoring in the RAR window.

It can be learned from the foregoing examples that, even if a same RA-RNTI is obtained through calculation for different time-frequency resources, the UE may perform distinguishing by using the number that is of the 1st PRACH slot of the RO occupied for sending the preamble in the slot group and that is indicated by the first indication, thereby avoiding a problem that access efficiency decreases.

According to the RA-RNTI processing method provided in this embodiment of this application, the random access response RAR message is received based on the first indication sent by the network side device, where the first indication indicates the number of the 1st PRACH slot of the RO occupied for sending the preamble in the slot group. Therefore, a problem that access efficiency decreases in a case that a PRACH SCS exceeds 120 KHz can be avoided.

Based on the foregoing embodiment, the receiving a random access response RAR message according to downlink control information DCI in the PDCCH includes:
receiving the random access response RAR message based on a first indication sent by a network side device, where the first indication indicates a number of a 1st slot group of the RO occupied for sending the preamble.

Specifically, in a case that the RA-RNTI is calculated by using the formula (7), as shown in FIG. 5, 3-bit DCI is required to respectively indicate slot groups 0, 1, 2, 3, 4, 5, 6, 7.

UE 1 sends a PRACH on an RO 1 in a PRACH slot 2 in the slot group 1, and the UE 1 calculates the RA-RNTI according to the RO 1: $RA - RNTI = 1 + 4 + 14 \times 2 + 14 \times 80 \times 4 + 14 \times 80 \times 8 \times 0 = 4513 \left(RO1:s_id=4,f_id=4\right) ;$ and
in a configured CORESET/search space in a corresponding RAR window, monitor DCI of the PDCCH scrambled by the RA-RNTI obtained through calculation, check whether a first indication field in the DCI is 1, and if the first indication field is 1, continue to receive the PDSCH and decode the PDSCH; otherwise, continue to perform monitoring in the RAR window.

UE 2 sends a PRACH on an RO 2 in a PRACH slot 40 in the slot group 1, and the UE 2 calculates the RA-RNTI according to the RO 2: $RA - RNT 2 = 1 + 8 + 14 \times 40 + 14 \times 80 \times 4 + 14 \times 80 \times 8 \times 0 = 5049 \left(RO2:s_id=8,f_id=4\right) ;$ ; and
in a configured CORESET/search space in a corresponding RAR window, monitors DCI of the PDCCH scrambled by the RA-RNTI obtained through calculation, checks whether a first indication field in the DCI is 1, and if the first indication field is 1, continues to receive the PDSCH and decode the PDSCH; otherwise, continues to perform monitoring in the RAR window.

UE 3 sends a PRACH on an RO 3 in a PRACH slot 2 in the slot group 2, and the UE 3 calculates the RA-RNTI according to the RO 3: $RA - RNT 3 = 1 + 4 + 14 \times 2 + 14 \times 80 \times 4 + 14 \times 80 \times 8 \times 0 = 4513 \left(RO3:s_id=4,f_id=4\right) ;$ ; and
in a configured CORESET/search space in a corresponding RAR window, monitor DCI of the PDCCH scrambled by the RA-RNTI obtained through calculation, check whether a first indication field in the DCI is 2, and if the first indication field is 2, continue to receive the PDSCH and decode the PDSCH; otherwise, continue to perform monitoring in the RAR window.

UE 4 sends a PRACH on an RO 4 in a PRACH slot 40 in the slot group 4, and the UE 4 calculates the RA-RNTI according to the RO 4: $RA - RNT 4 = 1 + 4 + 14 \times 40 + 14 \times 80 \times 4 + 14 \times 80 \times 8 \times 0 = 5045 \left(RO4:s_id=4,f_id=4\right) ;$ and
in a configured CORESET/search space in a corresponding RAR window, monitor DCI of the PDCCH scrambled by the RA-RNTI obtained through calculation, check whether a first indication field in the DCI is 4, and if the first indication field is 4, continue to receive the PDSCH and decode the PDSCH; otherwise, continue to perform monitoring in the RAR window.

It can be learned from the foregoing examples that, even if a same RA-RNTI is obtained through calculation for different time-frequency resources, the UE may perform distinguishing by using the number that is of the 1st slot group of the RO occupied for sending the preamble and that is indicated by the first indication, thereby avoiding a problem that access efficiency decreases.

According to the RA-RNTI processing method provided in this embodiment of this application, the random access response RAR message is received based on the first indication sent by the network side device, where the first indication indicates the number of the 1st slot group of the RO occupied for sending the preamble. Therefore, a problem that access efficiency decreases in a case that a PRACH SCS exceeds 120 KHz can be avoided.

Based on the foregoing embodiment, the receiving a random access response RAR message according to downlink control information DCI in the PDCCH includes:
receiving the random access response RAR message based on a first indication sent by a network side device, where the first indication indicates a value of (1×C1+s_id×C2+Symbol×t_id×C3+Symbol×X×f_id×C4+Symbol×X×Y×ul_carrier_id×C5)/A.

Specifically, in a case that the RA-RNTI is calculated by using the formula (3), 2-bit DCI is required to indicate a value of (1+s_id+14×t_id+14×640×f_id +14×640×8×ul_carrier_id)/65522.

UE 1 sends a PRACH on an RO1, and the UE 1 calculates the RA-RNTI according to the RO 1: 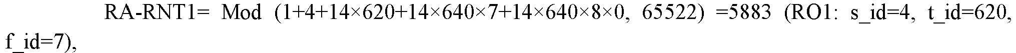 RA-RNT1= Mod (1+4+14×620+14×640×7+14×640×8×0, 65522) =5883 (RO1: s_id=4, t_id=620, f_id=7), where
the DCI indicates that (1+4+14×620+14×640×7+14×640×8×0)/65522=1; and
in a configured CORESET/search space in a corresponding RAR window, monitor DCI of the PDCCH scrambled by the RA-RNTI obtained through calculation, check whether a first indication field in the DCI is 1, and if the first indication field is 1, continue to receive the PDSCH and decode the PDSCH; otherwise, continue to perform monitoring in the RAR window.

UE 2 sends a PRACH on an RO 2, and the UE 2 calculates the RA-RNTI according to the RO 2: 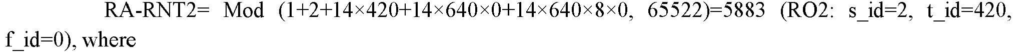 RA-RNT2= Mod (1+2+14×420+14×640×0+14×640×8×0, 65522)=5883 (RO2: s_id=2, t_id=420, f_id=0), where
the DCI indicates that (1+2+14×420+14×640×7+14×640×8×0)/65522=0; and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

UE 3 sends a PRACH on an RO 3, and the UE 3 calculates the RA-RNTI according to the RO 3: 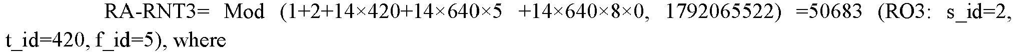 RA-RNT3= Mod (1+2+14×420+14×640×5 +14×640×8×0, 1792065522) =50683 (RO3: s_id=2, t_id=420, f_id=5), where
the DCI indicates that (1+2+14×420+14×640×7+14×640×8×0)/65522=0; and
in a configured CORESET/search space in a corresponding RAR window, monitors DCI of the PDCCH scrambled by the RA-RNTI obtained through calculation, checks whether a first indication field in the DCI is 0, and if the first indication field is 0, continues to receive the PDSCH and decode the PDSCH; otherwise, continues to perform monitoring in the RAR window.

It can be learned from the foregoing examples that, even if a same RA-RNTI is obtained through calculation for different time-frequency resources, the UE may perform distinguishing by using the value that is of (1×C1+s_id×C2+Symbol×t_id×C3+Symbol×X×f_id×C4+Symbol×X×Y×ul_carrier_id×C5)/A and that is indicated by the first indication, thereby avoiding a problem that access efficiency decreases.

According to the RA-RNTI processing method provided in this embodiment of this application, the random access response RAR message is received based on the first indication sent by the network side device, where the first indication indicates the value of (1×C1+s_id×C2+Symbol×t_id×C3+Symbol×X×f_id×C4+Symbol×X×Y×ul_carrier_id×C5)/A. Therefore, a problem that access efficiency decreases in a case that a PRACH SCS exceeds 120 KHz can be avoided.

Based on the foregoing embodiment, the first indication is carried in downlink control information DCI of the physical downlink control channel PDCCH, a Medium Access Control (Medium Access Control, MAC) control element (Control element, CE), or RAR information.

Specifically, a sending manner of the first indication may be selected according to an actual application requirement, for example, the first indication is carried in the downlink control information DCI of the physical downlink control channel PDCCH, the MAC CE, or the RAR information.

According to the RA-RNTI processing method provided in this embodiment of this application, the first indication is carried in the downlink control information DCI of the physical downlink control channel PDCCH, the MAC CE, or the RAR information, so that transmission flexibility of the first indication can be improved.

Based on the foregoing embodiment, an RO is configured in only one PRACH slot in one reference slot, and the PRACH slot in which the RO is configured is predefined by a protocol, configured by a radio resource control protocol RRC, or configured by a MAC CE.

Specifically, in a case that the RA-RNTI is calculated by using the formulas (2) and (4), an RO is configured in only one PRACH slot in one reference slot, so that RA-RNTIs obtained through calculation can be different for different time-frequency resources. Based on this, when the formula (2) is used for calculation, even if the first indication information is not used, the UE can also accurately determine the corresponding RAR message.

According to the RA-RNTI processing method provided in this embodiment of this application, an RO is configured in only one PRACH slot in one reference slot, so that repeated RA-RNTIs can be avoided in a case that a PRACH SCS exceeds 120 KHz, thereby avoiding a problem that access efficiency decreases.

Based on the foregoing embodiment, an RO is configured in only one PRACH slot in one slot group, and the PRACH slot in which the RO is configured is predefined by a protocol, configured by a radio resource control protocol RRC, or configured by a MAC CE.

Specifically, in a case that the RA-RNTI is calculated by using the formulas (5) and (6), an RO is configured in only one PRACH slot in one slot group, so that RA-RNTIs obtained through calculation can be different for different time-frequency resources. Based on this, when the formula (5) is used for calculation, even if the first indication information is not used, the UE can also accurately determine the corresponding RAR message.

According to the RA-RNTI processing method provided in this embodiment of this application, an RO is configured in only one PRACH slot in one slot group, so that repeated RA-RNTIs can be avoided in a case that a PRACH SCS exceeds 120 KHz, thereby avoiding a problem that access efficiency decreases.

Based on the foregoing embodiment, an RO is configured in only one slot group, and the slot group in which the RO is configured is predefined by a protocol, or configured by a radio resource control protocol RRC, or configured by a MAC CE.

Specifically, in a case that the RA-RNTI is calculated by using the formulas (7) and (8), an RO is configured in only one slot group, so that RA-RNTIs obtained through calculation can be different for different time-frequency resources. Based on this, when the formula (7) is used for calculation, even if the first indication information is not used, the UE can also accurately determine the corresponding RAR message.

According to the RA-RNTI processing method provided in this embodiment of this application, an RO is configured in only one slot group, so that repeated RA-RNTIs can be avoided in a case that a PRACH SCS exceeds 120 KHz, thereby avoiding a problem that access efficiency decreases.

Based on the foregoing embodiment, grouping is performed for a slot group according to the following rule:
slots within the first specified time length are evenly grouped into N slot groups, and each group includes M slots; the M slots may be consecutive or inconsecutive; if there are M consecutive slots, every M slots belong to one group according to a time sequence; and if there are M inconsecutive slots, slots satisfying that remainders of slot indexes dividing N are equal are in a same group, where a slot index is a slot number.

Specifically, in a slot grouping manner, the slots within the first specified time length may be evenly grouped into the N slot groups, and each group includes M slots; the M slots may be consecutive or inconsecutive; if there are M consecutive slots, every M slots belong to one group according to a time sequence; and if there are M inconsecutive slots, slots satisfying that remainders of slot indexes dividing N are equal are in a same group, where a slot index is a slot number. It can be understood that slot grouping may also be performed in any other feasible manner. This is not specifically limited in this embodiment of this application.

According to the RA-RNTI processing method provided in this embodiment of this application, the slots within the first specified time length are evenly grouped into the N slot group, where each group includes M slots, and the RA-RNTI is calculated based on a number in the group, so that a problem that access efficiency decreases in a case that a PRACH SCS exceeds 120 KHz can be avoided.

Based on the foregoing embodiment, the reference slot subcarrier spacing is configured by a network side or predefined by a protocol.

Specifically, the subcarrier spacing of the reference slot is configured by the network side or predefined by the protocol. It can be understood that the subcarrier spacing of the reference slot may also be configured in any other feasible manner. This is not specifically limited in this embodiment of this application.

According to the RA-RNTI processing method provided in this embodiment of this application, the subcarrier spacing of the reference slot is set through configuration of the network side or the protocol definition, thereby ensuring flexibility of parameter setting.

Based on the foregoing embodiment, the method is applied to a preset frequency range and/or a preset physical random access channel subcarrier spacing PRACH SCS.

Specifically, the preset frequency range is 52.6-71 GHz, and the physical random access channel subcarrier spacing PRACH SCS is 480 KHz or 960 KHz.

The RA-RNTI processing method provided in this embodiment of this application may be applied to the preset frequency range and/or the preset physical random access channel subcarrier spacing PRACH SCS, to avoid a problem that access efficiency decreases in a communications system supporting a higher PRACH SCS.

It should be noted that, all the RA-RNTI processing methods provided in this embodiment of this application are applicable not only to RA-RNTI processing in the foregoing four-step (4-step) RACH, but also to message B (MSGB)-RNTI processing in the two-step (2-step) RACH. For example, in the 2-step RACH, the MSGB-RNTI may be obtained through calculation according to one of the following formulas: $MSGB - RNTI = 1 \times A 1 + s_id \times A 2 + Symbol \times t_id \times A 3 + Symbol \times X \times f_id \times A 4 + Symbolx X \times Y \times A 5$ 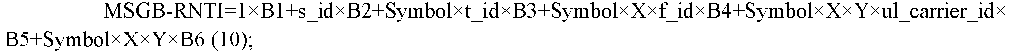 MSGB-RNTI=1×B1+s_id×B2+Symbol×t_id×B3+Symbol×X×f_id×B4+Symbol×X×Y×ul_carrier_id× B5+Symbol×X×Y×B6 (10); 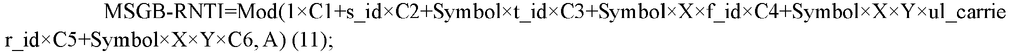 MSGB-RNTI=Mod(1×C1+s_id×C2+Symbol×t_id×C3+Symbol×X×f_id×C4+Symbol×X×Y×ul_carrie r_id×C5+Symbol×X×Y×C6, A) (11); 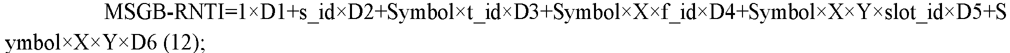 MSGB-RNTI=1×D1+s_id×D2+Symbol×t_id×D3+Symbol×X×f_id×D4+Symbol×X×Y×slot_id×D5+S ymbol×X×Y×D6 (12); 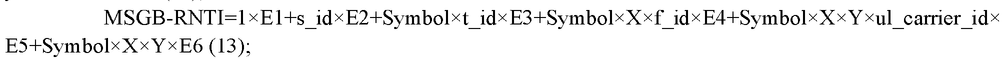 MSGB-RNTI=1×E1+s_id×E2+Symbol×t_id×E3+Symbol×X×f_id×E4+Symbol×X×Y×ul_carrier_id× E5+Symbol×X×Y×E6 (13); 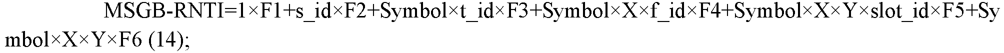 MSGB-RNTI=1×F1+s_id×F2+Symbol×t_id×F3+Symbol×X×f_id×F4+Symbol×X×Y×slot_id×F5+Sy mbol×X×Y×F6 (14); 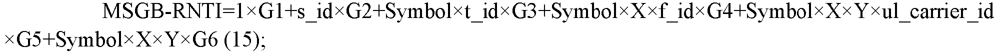 MSGB-RNTI=1×G1+s_id×G2+Symbol×t_id×G3+Symbol×X×f_id×G4+Symbol×X×Y×ul_carrier_id ×G5+Symbol×X×Y×G6 (15); 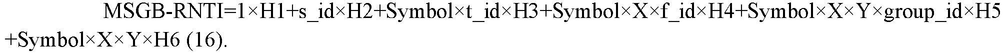 MSGB-RNTI=1×H1+s_id×H2+Symbol×t_id×H3+Symbol×X×f_id×H4+Symbol×X×Y×group_id×H5 +Symbol×X×Y×H6 (16).

A1 to A5, B1 to B6, C1 to C6, D1 to D6, E1 to E6, F1 to F6, G1 to G6, and H1 to H6 are all integers.

In the foregoing formulas (9) to (16), except that a value of (1×C1+s_id×C2+Symbol×t_id×C3+Symbol×X×f_id×C4+Symbol×X×Y×ul_carrier_id×C5+Symbol×X×Y×C6)/ A) in the formula (11) indicated by the first indication is slightly different from indication content of the formula (3), parameter definitions and processing methods of other formulas may be in a one-to-one correspondence with the calculation formulas (1) to (8) of the RA-RNTI.

It should be noted that the RA-RNTI processing method provided in the embodiments of this application may be performed by an RA-RNTI processing apparatus, or a control module that is in the RA-RNTI processing apparatus and that is configured to perform the RA-RNTI processing method. In the embodiments of this application, that the RA-RNTI processing apparatus performs the RA-RNTI processing method is used as an example to describe the RA-RNTI processing apparatus provided in the embodiments of this application.

FIG. 6 is a first schematic structural diagram of an RA-RNTI processing apparatus according to an embodiment of this application. As shown in FIG. 6, the apparatus includes:
an RA-RNTI determining module 601, configured to calculate an RA-RNTI based on time-frequency resource information of a random access occasion RO for sending a preamble, where
the calculating an RA-RNTI based on time-frequency resource information of a random access occasion RO for sending a preamble includes:
   calculating the RA-RNTI based on a parameter t_id, where
   t_id is a slot number of a 1st slot of the RO occupied for sending the preamble within a first specified time length, or a number of a 1st slot group of the RO occupied for sending the preamble, or a number of a 1st PRACH slot of the RO occupied for sending the preamble in a slot group.

Based on the foregoing embodiment, the slot number is obtained through numbering based on a reference slot subcarrier spacing or a physical random access channel PRACH slot subcarrier spacing; and
the slot group is obtained by grouping slots within the first specified time length according to a specific rule.

Based on the foregoing embodiment, the apparatus further includes:
a PDCCH monitoring module, configured to: during running of a random access response RAR window, monitor a physical downlink control channel PDCCH scrambled based on the RA-RNTI; and
an RAR message receiving module, configured to receive a random access response RAR message according to downlink control information DCI in the PDCCH.

Based on the foregoing embodiment, the calculating the RA-RNTI based on a parameter t_id includes:
obtaining the RA-RNTI through calculation according to the following formula: $RA - RNTI = 1 \times A 1 + s_id \times A 2 + Symbol \times t_id \times A 3 + Symbol \times X \times f_id \times A 4 ,$ where
t_id is a slot number of a 1st slot of the RO occupied for sending the preamble within a first specified time length, the slot number is obtained through numbering based on a PRACH slot subcarrier spacing, and the first specified time length is at least one slot, at least one millisecond, at least one subframe, at least one time domain length of an RO, at least one frame, or at least one time window;
X is configured by a network side, or X is a preset value, or X is determined by the terminal, or X is a total quantity of slots included in the first specified time length;
s_id is a number of a start orthogonal frequency division multiplexing OFDM symbol of the RO occupied for sending the preamble;
f_id is a number of the RO occupied for sending the preamble in frequency domain;
Symbol is a quantity of symbols within a second specified time length, and the second specified time length is at least one slot, at least one millisecond, at least one subframe, at least one time domain length of an RO, at least one frame, or at least one time window; and
A1, A2, A3, and A4 are integers.

Based on the foregoing embodiment, the calculating the RA-RNTI based on a parameter t_id includes:
obtaining the RA-RNTI through calculation according to the following formula: $RA - RNTI = 1 \times B 1 + s_id \times B 2 + Symbol \times t_id \times B 3 + Symbol \times X \times f_id \times B 4 + Symbol \times X \times Y \times ul_carrier_id \times B 5 ,$ where
t_id is a slot number of a 1st slot of the RO occupied for sending the preamble within a first specified time length, the slot number is obtained through numbering based on a reference slot subcarrier spacing, and the first specified time length is at least one slot, at least one millisecond, at least one subframe, at least one time domain length of an RO, at least one frame, or at least one time window;
X is configured by a network side, or X is a preset value, or X is determined by the terminal, or X is a total quantity of reference slots included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
Symbol is a quantity of symbols within a second specified time length, and the second specified time length is at least one slot, at least one millisecond, at least one subframe, at least one time domain length of an RO, at least one frame, or at least one time window; and
ul_carrier_id is configured by the network side, or ul_carrier_id is a preset value, or ul_carrier_id is determined by the terminal, or ul_carrier_id is an uplink carrier number used for sending the preamble; and
B1, B2, B3, B4, and B5 are integers.

Based on the foregoing embodiment, the calculating the RA-RNTI based on a parameter t_id includes:
obtaining the RA-RNTI through calculation according to the following formula: 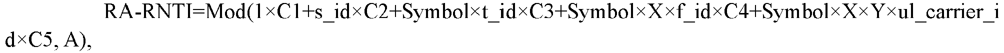 RA-RNTI=Mod(1×C1+s_id×C2+Symbol×t_id×C3+Symbol×X×f_id×C4+Symbol×X×Y×ul_carrier_i d×C5, A), where
t_id is a slot number of a 1st slot of the RO occupied for sending the preamble within a first specified time length, the slot number is obtained through numbering based on a PRACH slot subcarrier spacing, and the first specified time length is at least one slot, at least one millisecond, at least one subframe, at least one time domain length of an RO, at least one frame, or at least one time window;
X is configured by a network side, or X is a preset value, or X is a total quantity of slots included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window;
C1, C2, C3, C4, C5 are integers; and
A is configured by the network side, or A is a preset value, or A is determined by the terminal.

Based on the foregoing embodiment, the calculating the RA-RNTI based on a parameter t_id includes:
obtaining the RA-RNTI through calculation according to the following formula: $RA - RNTI = 1 \times D 1 + s_id \times D 2 + Symbol \times t_id \times D 3 + Symbol \times X \times f_id \times D 4 + Symbol \times X \times Y \times slot_id \times D 5 ,$ where
t_id is a slot number of a 1st slot of the RO occupied for sending the preamble within a first specified time length, the slot number is obtained through numbering based on a reference slot subcarrier spacing, and the first specified time length is at least one slot, at least one millisecond, at least one subframe, at least one time domain length of an RO, at least one frame, or at least one time window;
X is configured by a network side, or X is a preset value, or X is a total quantity of reference slots included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
slot_id is a number of a 1st PRACH slot of the RO occupied for sending the preamble in a reference slot;
Symbol is a quantity of symbols within a second specified time length, and the second specified time length is at least one slot, at least one millisecond, at least one subframe, at least one time domain length of an RO, at least one frame, or at least one time window; and
D1, D2, D3, D4, D5 are integers.

Based on the foregoing embodiment, the calculating the RA-RNTI based on a parameter t_id includes:
obtaining the RA-RNTI through calculation according to the following formula: $RA - RNTI = 1 \times E 1 + s_id \times E 2 + Symbol \times t_id \times E 3 + Symbol \times X \times f_id \times E 4 + Symbol \times X \times Y \times ul_carrier_id \times E 5 ,$ where
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble.
Symbol is a quantity of symbols within a second specified time length, and the second specified time length is at least one slot, at least one millisecond, at least one subframe, at least one time domain length of an RO, at least one frame, or at least one time window; and
E1, E2, E3, E4, and E5 are integers.

Based on the foregoing embodiment, the calculating the RA-RNTI based on a parameter t_id includes:
obtaining the RA-RNTI through calculation according to the following formula: $RA - RNTI = 1 \times F 1 + s_id \times F 2 + Symbol \times t_id \times F 3 + Symbol \times X \times f_id \times F 4 + Symbol \times X \times Y \times slot_id \times F 5 ,$ where
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups included in the first specified time length;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
slot_id is a number of a 1st PRACH slot of the RO occupied for sending the preamble in a slot group.
Symbol is a quantity of symbols within a second specified time length, and the second specified time length is at least one slot, at least one millisecond, at least one subframe, at least one time domain length of an RO, at least one frame, or at least one time window; and
F1, F2, F3, F4, and F5 are integers.

Based on the foregoing embodiment, the calculating the RA-RNTI based on a parameter t_id includes:
obtaining the RA-RNTI through calculation according to the following formula: $RA - RNTI = 1 \times G 1 + s_id \times G 2 + Symbol \times t_id \times G 3 + Symbol \times X \times f_id \times G 4 + Symbol \times X \times Y \times ul_carrier_id \times G 5$ , where
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots included in one slot group;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window; and
G1, G2, G3, G4, and G5 are integers.

Based on the foregoing embodiment, the calculating the RA-RNTI based on a parameter t_id includes:
obtaining the RA-RNTI through calculation according to the following formula: $RA - RNTI = 1 \times H 1 + s_id \times H 2 + Symbol \times t_id \times H 3 + Symbol \times X \times f_id \times H 4 + Symbol \times X \times Y \times group_id \times H 5 ,$ where
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots included in one slot group;
Y is configured by the network side, or Y is a preset value, or Y is determined by the terminal, or Y is a quantity of ROs for performing frequency division multiplexing FDM on a PRACH resource;
s_id is a number of a start orthogonal frequency division multiplexing OFDM symbol of the RO occupied for sending the preamble;
f_id is a number of the RO occupied for sending the preamble in frequency domain;
group _id is a number of a 1st slot group of the RO occupied for sending the preamble;
Symbol is a quantity of symbols within a second specified time length, and the second specified time length is at least one slot, at least one millisecond, at least one subframe, at least one time domain length of an RO, at least one frame, or at least one time window; and
H1, H2, H3, H4, and H5 are integers.

Based on the foregoing embodiment, the receiving a random access response RAR message according to downlink control information DCI in the PDCCH includes:
receiving the random access response RAR message based on a first indication sent by a network side device, where the first indication indicates a number of a 1st PRACH slot of the RO occupied for sending the preamble in a reference slot.

Based on the foregoing embodiment, the receiving a random access response RAR message according to downlink control information DCI in the PDCCH includes:
receiving the random access response RAR message based on a first indication sent by a network side device, where the first indication indicates a number of a 1st PRACH slot of the RO occupied for sending the preamble in a slot group.

Based on the foregoing embodiment, the receiving a random access response RAR message according to downlink control information DCI in the PDCCH includes:
receiving the random access response RAR message based on a first indication sent by a network side device, where the first indication indicates a number of a 1st slot group of the RO occupied for sending the preamble.

Based on the foregoing embodiment, the receiving a random access response RAR message according to downlink control information DCI in the PDCCH includes:
receiving the random access response RAR message based on a first indication sent by a network side device, where the first indication indicates a value of (1×C1+s_id×C2+Symbol×t_id×C3+Symbol×X×f_id×C4+Symbol×X×Y×ul_carrier_id×C5)/A.

Based on the foregoing embodiment, the first indication is carried in downlink control information DCI of the physical downlink control channel PDCCH, a MAC CE, or RAR information.

Based on the foregoing embodiment, an RO is configured in only one PRACH slot in one reference slot, and the PRACH slot in which the RO is configured is predefined by a protocol, configured by a radio resource control protocol RRC, or configured by a MAC CE.

Based on the foregoing embodiment, an RO is configured in only one PRACH slot in one slot group, and the PRACH slot in which the RO is configured is predefined by a protocol, configured by a radio resource control protocol RRC, or configured by a MAC CE.

Based on the foregoing embodiment, an RO is configured in only one slot group, and the slot group in which the RO is configured is predefined by a protocol, or configured by a radio resource control protocol RRC, or configured by a MAC CE.

Based on the foregoing embodiment, grouping is performed for a slot group according to the following rule:
slots within the first specified time length are evenly grouped into N slot groups, and each group includes M slots; the M slots may be consecutive or inconsecutive; if there are M consecutive slots, every M slots belong to one group according to a time sequence; and if there are M inconsecutive slots, slots satisfying that remainders of slot indexes dividing N are equal are in a same group, where a slot index is a slot number.

Based on the foregoing embodiment, the reference slot subcarrier spacing is configured by a network side or predefined by a protocol.

Based on the foregoing embodiment, the apparatus is applied to a preset frequency range and/or a preset physical random access channel subcarrier spacing PRACH SCS.

Specifically, the foregoing RA-RNTI processing apparatus provided in this embodiment of this application can implement all method steps implemented in the foregoing method embodiment, and can achieve a same technical effect. Herein, the parts and the beneficial effects of this embodiment that are the same as those of the method embodiment are not described in detail again.

FIG. 7 is a second schematic flowchart of an RA-RNTI processing method according to an embodiment of this application. As shown in FIG. 7, the method includes the following steps.

Step 701: Obtain an association relationship between a target CORESET and/or search space and a target random access occasion RO.

Step 702: In the target CORESET and/or search space associated with the target RO, monitor a downlink channel scrambled by an RA-RNTI, where the target RO is an RO for sending a preamble by the terminal.

Specifically, the target CORESET/search space is associated with the target RO, and on the target CORESET/search space associated with the target RO, UE monitors a PDCCH and/or a PDSCH scrambled by the RA-RNTI, where the target RO is an RO for sending a preamble by the UE. For example, UE1 that sends a preamble on a first target RO monitors a PDCCH on an RA-SS1, and UE2 that sends a preamble on a second target RO monitors a PDCCH on an RA-SS 2.

It is assumed that an RO 1 corresponds to a CORESET 1/search space 1, and an RO 2 corresponds to a CORESET 2/search space 2.

UE 1 sends a PRACH on the selected RO 1, calculates an RA-RNTI according to the RO 1, and in the corresponding CORESET 1/search space 1, monitors a PDCCH scrambled by the RA-RNTI that is obtained through calculation.

UE 2 sends a PRACH on the selected RO 2, calculates an RA-RNTI according to the RO 2, and in the corresponding CORESET 2/search space 2, monitors a PDCCH scrambled by the RA-RNTI that is obtained through calculation. In this way, even if a same RA-RNTI is obtained through calculation for different time-frequency resources, the UE may monitor, in the target CORESET and/or search space by using the association relationship between the target CORESET and/or search space and the target random access occasion RO, the downlink channel scrambled by the RA-RNTI, to determine a corresponding RAR message, thereby avoiding a problem that access efficiency decreases.

According to the RA-RNTI processing method provided in this embodiment of this application, a downlink channel scrambled by an RA-RNTI is monitored in a target CORESET and/or search space associated with a target RO. Therefore, a problem that access efficiency decreases in a case that a PRACH SCS exceeds 120 KHz can be avoided.

Based on the foregoing embodiment, the association relationship is predefined by a protocol or configured by a radio resource control protocol RRC.

Specifically, the association relationship may be predefined by the protocol or configured by the radio resource control protocol RRC. It can be understood that the association relationship may also be set in any other feasible manner. This is not specifically limited in this embodiment of this application.

According to the RA-RNTI processing method provided in this embodiment of this application, the association relationship is predefined by the protocol or configured by the radio resource control protocol RRC, thereby ensuring flexibility of configuring the association relationship.

It should be noted that the RA-RNTI processing method provided in the embodiments of this application may be performed by an RA-RNTI processing apparatus, or a control module that is in the RA-RNTI processing apparatus and that is configured to perform the RA-RNTI processing method. In the embodiments of this application, that the RA-RNTI processing apparatus performs the RA-RNTI processing method is used as an example to describe the RA-RNTI processing apparatus provided in the embodiments of this application.

FIG. 8 is a second schematic structural diagram of an RA-RNTI processing apparatus according to an embodiment of this application. As shown in FIG. 8, the apparatus includes:
an association relationship obtaining module 801, configured to obtain an association relationship between a target CORESET and/or search space and a target random access occasion RO; and
a downlink channel monitoring module 802, configured to: in the target CORESET and/or search space associated with the target RO, monitor a downlink channel scrambled by an RA-RNTI, where the target RO is an RO for sending a preamble by the terminal.

Based on the foregoing embodiment, the association relationship is predefined by a protocol or configured by a radio resource control protocol RRC.

Specifically, the foregoing RA-RNTI processing apparatus provided in this embodiment of this application can implement all method steps implemented in the foregoing method embodiment, and can achieve a same technical effect. Herein, the parts and the beneficial effects of this embodiment that are the same as those of the method embodiment are not described in detail again.

The RA-RNTI processing apparatus in this embodiment of this application may be an apparatus, or may be a component, an integrated circuit, or a chip in a terminal. The apparatus may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The RA-RNTI processing apparatus in this embodiment of this application may be an apparatus with an operating system. The operating system may be an Android (Android) operating system, an iOS operating system, or another possible operating system. This is not specifically limited in this embodiment of this application.

The RA-RNTI processing apparatus provided in this embodiment of this application can implement the processes implemented in the method embodiment in FIG. 2 or FIG. 7, and achieve a same technical effect. To avoid repetition, details are not described herein again.

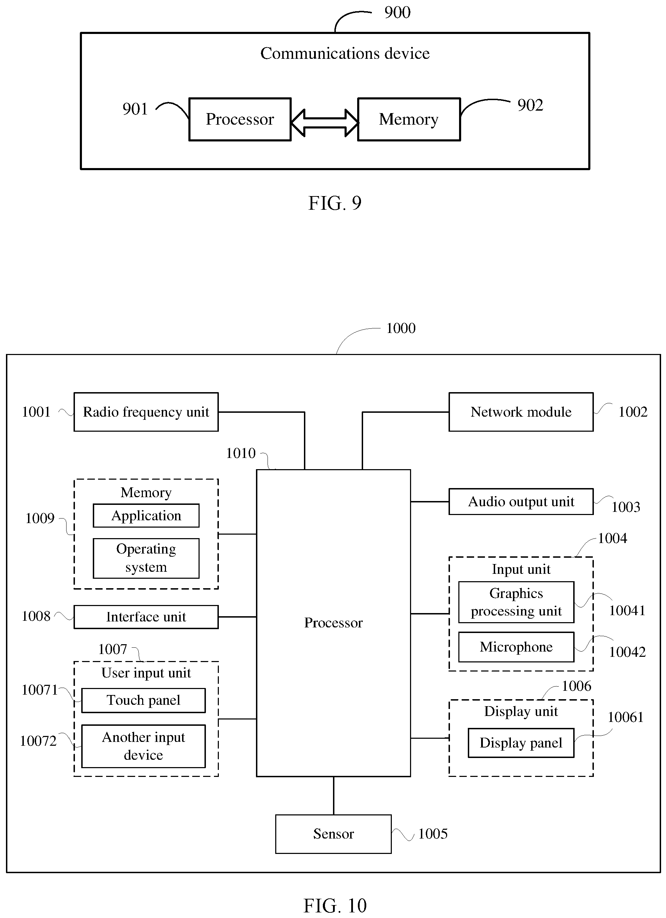

Optionally, as shown in FIG. 9, an embodiment of this application further provides a communications device 900, including a processor 901, a memory 902, and a program or an instruction that is stored in the memory 902 and executable on the processor 901. For example, when the communications device 900 is a terminal, the program or the instruction is executed by the processor 901 to implement the processes of the foregoing RA-RNTI processing method embodiment, and a same technical effect can be achieved. When the communications device 900 is a network side device, the program or the instruction is executed by the processor 901 to implement the processes of the foregoing RA-RNTI processing method embodiment, and a same technical effect can be achieved. To avoid repetition, details are not described herein again.

FIG. 10 is a schematic structural diagram of hardware of a terminal according to an embodiment of this application.

A terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 10 constitutes no limitation on the terminal, and the terminal may include more or fewer components than those shown in the figure, or combine some components, or have different component arrangements. Details are not described herein.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, and an application or an instruction required by at least one function (for example, a sound playing function or an image playing function). In addition, the memory 1009 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communications, for example, a baseband processor. It can be understood that, alternatively, the modem processor may not be integrated into the processor 1010.

The processor 1010 is configured to calculate an RA-RNTI based on time-frequency resource information of a random access occasion RO for sending a preamble, where
the calculating an RA-RNTI based on time-frequency resource information of a random access occasion RO for sending a preamble includes:
calculating the RA-RNTI based on a parameter t_id, where
t_id is a slot number of a 1st slot of the RO occupied for sending the preamble within a first specified time length, or a number of a 1st slot group of the RO occupied for sending the preamble, or a number of a 1st PRACH slot of the RO occupied for sending the preamble in a slot group.

According to the terminal provided in this embodiment of this application, an RA-RNTI is calculated based on a slot number of a 1st slot of an RO occupied for sending a preamble within a first specified time length, or a number of a 1st slot group of an RO occupied for sending a preamble, or a number of a 1st PRACH slot of an RO occupied for sending a preamble in a slot group. Therefore, in a case that RA-RNTIs corresponding to different time-frequency resources are the same or RA-RNTIs overflow, a problem that access efficiency decreases when a PRACH SCS exceeds 120 KHz can be avoided.

Optionally, the radio frequency unit 1001 is configured to: during running of a random access response RAR window, monitor a physical downlink control channel PDCCH scrambled based on the RA-RNTI; and
receive a random access response RAR message according to downlink control information DCI in the PDCCH.

According to the terminal provided in this embodiment of this application, during running of a random access response RAR window, a physical downlink control channel PDCCH scrambled based on an RA-RNTI is monitored, and a random access response RAR message is received according to downlink control information DCI in the PDCCH, so that the corresponding RAR message can be accurately determined based on the RA-RNTI, thereby avoiding a problem that access efficiency decreases.

Optionally, the radio frequency unit 1001 is further configured to receive the random access response RAR message based on a first indication sent by a network side device, where the first indication indicates a number of a 1st PRACH slot of the RO occupied for sending the preamble in a reference slot, or a number of a 1st PRACH slot of the RO occupied for sending the preamble in a slot group, or a number of a 1st slot group of the RO occupied for sending the preamble, or a value of (1×C1+s_id×C2+Symbol×t_id×C3+Symbol×X×f_id×C4+Symbol×X×Y×ul_carrier_id×C5)/A.

According to the terminal provided in this embodiment of this application, a random access response RAR message is received based on a first indication sent by a network side device, so that a problem that access efficiency decreases in a case that a PRACH SCS exceeds 120 KHz can be avoided.

In addition, the radio frequency unit 1001 is configured to: in the target CORESET and/or search space associated with the target RO, monitor a downlink channel scrambled by an RA-RNTI, where the target RO is an RO for sending a preamble by the terminal.

The processor 1010 is configured to obtain an association relationship between a target CORESET and/or search space and a target random access occasion RO.

According to the terminal provided in this embodiment of this application, a downlink channel scrambled by an RA-RNTI is monitored in a target CORESET and/or search space associated with a target RO. Therefore, a problem that access efficiency decreases in a case that a PRACH SCS exceeds 120 KHz can be avoided.

An embodiment of this application further provides a readable storage medium. The readable storage medium stores a program or an instruction, and when the program or the instruction is executed by a processor, the processes of the foregoing RA-RNTI processing method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network side device to implement the processes of the foregoing RA-RNTI processing method embodiment and a same technical effect can be achieved. To avoid repetition, details are not described herein again.

An embodiment of this application further provides a computer software product. The computer software product is stored in a non-transitory storage medium, and the computer software product is executed by at least one processor to implement the processes of the foregoing RA-RNTI processing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

It can be clearly understood by a person skilled in the art that, for the purpose of convenient and brief description, for a detailed operating process of the foregoing system, apparatus, and unit, refer to a corresponding process in the foregoing method embodiments. Details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions of the present disclosure essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling related hardware. The program may be stored in a computer readable storage medium. When the program runs, the processes of the methods in the embodiments are performed. The storage medium may be a magnetic disk, an optical disc, a ROM, a RAM, or the like.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the protection scope defined by the appended claims.

## Claims

1. A random access-radio network temporary identity, RA-RNTI, processing method, performed by a terminal, and comprising:
calculating (201) an RA-RNTI based on time-frequency resource information of a random access occasion, RO, for sending a preamble,
wherein the calculating (201) an RA-RNTI based on time-frequency resource information of a RO for sending a preamble comprises:
calculating the RA-RNTI based on a parameter t_id, wherein
t_id is a number of a 1st slot group of the RO occupied for sending the preamble, or a number of a 1st physical random access channel, PRACH, slot of the RO occupied for sending the preamble in a slot group.

2. The RA-RNTI processing method according to claim 1, wherein the slot group is obtained by grouping slots within a first specified time length according to a specific rule.

3. The RA-RNTI processing method according to claim 2, wherein after the calculating (201) an RA-RNTI based on time-frequency resource information of an RO for sending a preamble, the method further comprises:
during running of a random access response, RAR, window, monitoring a physical downlink control channel, PDCCH, scrambled based on the RA-RNTI; and
receiving a RAR message according to downlink control information, DCI, in the PDCCH.

4. The RA-RNTI processing method according to claim 3, wherein the calculating the RA-RNTI based on a parameter t_id comprises:
obtaining the RA-RNTI through calculation according to following formula: $RA - RNTI = 1 \times E 1 + s_id \times E 2 + Symbol \times t_id \times E 3 + Symbol \times X \times f_id \times E 4 + Symbol \times X \times Y \times ul_carrier_id \times E 5 ,$ , wherein
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups comprised in the first specified time length;
Y is configured by the network side, or Y is a preset value, or Y is determined by the terminal, or Y is a quantity of ROs for performing frequency division multiplexing, FDM, on a PRACH resource;
s_id is a number of a start orthogonal frequency division multiplexing, OFDM, symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window; and
E1, E2, E3, E4, and E5 are integers.

5. The RA-RNTI processing method according to claim 1, wherein the calculating the RA-RNTI based on a parameter t_id comprises:
obtaining the RA-RNTI through calculation according to following formula: $RA - RNTI = 1 \times F 1 + s_id \times F 2 + Symbol \times t_id \times F 3 + Symbol \times X \times f_id \times F 4 + Symbol \times X \times Y \times slot_id \times F 5 ,$ wherein
t_id is a number of a 1st slot group of the RO occupied for sending the preamble in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of slot groups comprised in the first specified time length;
Y is configured by the network side, or Y is a preset value, or Y is determined by the terminal, or Y is a quantity of ROs for performing frequency division multiplexing, FDM, on a PRACH resource;
s_id is a number of a start orthogonal frequency division multiplexing, OFDM, symbol of the RO occupied for sending the preamble;
f_id is a number of the RO occupied for sending the preamble in frequency domain;
slot_id is a number of a 1st PRACH slot of the RO occupied for sending the preamble in a slot group;
Symbol is a quantity of symbols within a second specified time length, and the second specified time length is at least one slot, at least one millisecond, at least one subframe, at least one time domain length of an RO, at least one frame, or at least one time window; and
F1, F2, F3, F4, and F5 are integers.

6. The RA-RNTI processing method according to claim 3, wherein the calculating the RA-RNTI based on a parameter t_id comprises:
obtaining the RA-RNTI through calculation according to following formula: $RA - RNTI = 1 \times G 1 + s_id \times G 2 + Symbol \times t_id \times G 3 + Symbol \times X \times f_id \times G 4 + Symbol \times X \times Y \times ul_carrier_id \times G 5 ,$ wherein
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots comprised in one slot group;
Y is configured by the network side, or Y is a preset value, or Y is determined by the terminal, or Y is a quantity of ROs for performing frequency division multiplexing, FDM, on a PRACH resource;
s_id is a number of a start orthogonal frequency division multiplexing, OFDM, symbol of the RO occupied for sending the preamble;
f_id is a number of the RO occupied for sending the preamble in frequency domain;
ul_carrier_id is configured by the network side, or ul_carrier_id is a preset value, or ul_carrier_id is determined by the terminal, or ul_carrier_id is an uplink carrier number used for sending the preamble;
Symbol is a quantity of symbols within a second specified time length, and the second specified time length is at least one slot, at least one millisecond, at least one subframe, at least one time domain length of an RO, at least one frame, or at least one time window; and
G1, G2, G3, G4, and G5 are integers.

7. The RA-RNTI processing method according to claim 1, wherein the calculating the RA-RNTI based on a parameter t_id comprises:
obtaining the RA-RNTI through calculation according to following formula: $RA - RNTI = 1 \times H 1 + s_id \times H 2 + Symbol \times t_id \times H 3 + Symbol \times X \times f_id \times H 4 + Symbol \times X \times Y \times group_id \times H 5 ,$ , wherein
t_id is a number of a 1st PRACH slot of the RO occupied for sending the preamble in a slot group in N slot groups that are obtained by grouping slots within a first specified time length according to a specific rule, and the first specified time length is at least one slot, at least one millisecond, at least one subframe, at least one time domain length of an RO, at least one frame, or at least one time window;
X is configured by a network side, or X is a preset value, or X is a quantity of PRACH slots comprised in one slot group;
Y is configured by the network side, or Y is a preset value, or Y is determined by the terminal, or Y is a quantity of ROs for performing frequency division multiplexing, FDM, on a PRACH resource;
s_id is a number of a start orthogonal frequency division multiplexing, OFDM, symbol of the RO occupied for sending the preamble;
f_id is a number of the RO occupied for sending the preamble in frequency domain;
group _id is a number of a 1st slot group of the RO occupied for sending the preamble;
Symbol is a quantity of symbols within a second specified time length, and the second specified time length is at least one slot, at least one millisecond, at least one subframe, at least one time domain length of an RO, at least one frame, or at least one time window; and
H1, H2, H3, H4, and H5 are integers.

8. The RA-RNTI processing method according to claim 3, wherein the receiving a RAR message according to DCI in the PDCCH comprises:
receiving the RAR message based on a first indication sent by a network side device, wherein the first indication indicates a number of a 1st PRACH slot of the RO occupied for sending the preamble in a reference slot.

9. The RA-RNTI processing method according to claim 2, wherein grouping is performed for a slot group according to following rule:
slots within the first specified time length are evenly grouped into N slot groups, and each group comprises M slots; the M slots are consecutive or inconsecutive; if the M slots are M consecutive slots, every M slots belong to one group according to a time sequence; and if the M slots are M inconsecutive slots, slots satisfying that remainders of slot indexes dividing N are equal are in a same group, wherein a slot index is a slot number.

10. The RA-RNTI processing method according to claim 1, wherein the method is applied to a preset frequency range and/or a preset physical random access channel, PRACH, subcarrier spacing, SCS.

11. A terminal (1000), comprising a processor (1010), a memory (1009), and a program or an instruction that is stored in the memory (1009) and executable on the processor (1010), wherein when the program or the instruction is executed by the processor (1010), the steps of the RA-RNTI processing method according to any one of claims 1 to 10 are implemented.

## Patentansprüche

1. Ein Verarbeitungsverfahren für eine temporäre Zufallszugriffsfunknetzidentität, RA-RNTI, das durch ein Endgerät durchgeführt wird und Folgendes beinhaltet:
Berechnen (201) einer RA-RNTI basierend auf Zeit-Frequenz-Ressourceninformationen einer Zufallszugriffsgelegenheit, RO, zum Senden einer Präambel,
wobei das Berechnen (201) einer RA-RNTI basierend auf Zeit-Frequenz-Ressourceninformationen einer RO zum Senden einer Präambel Folgendes beinhaltet: Berechnen der RA-RNTI basierend auf einem Parameter t_id, wobei
t_id eine Nummer einer 1. Schlitzgruppe der zum Senden der Präambel belegten RO ist oder eine Nummer eines 1. Schlitzes eines physischen Zufallszugriffskanals, PRACH, der zum Senden der Präambel belegten RO in einer Schlitzgruppe ist.

2. RA-RNTI-Verarbeitungsverfahren gemäß Anspruch 1, wobei die Schlitzgruppe durch das Gruppieren von Schlitzen innerhalb einer ersten spezifizierten Zeitlänge gemäß einer spezifischen Regel erhalten wird.

3. RA-RNTI-Verarbeitungsverfahren gemäß Anspruch 2, wobei das Verfahren nach dem Berechnen (201) einer RA-RNTI basierend auf Zeit-Frequenz-Ressourceninformationen einer RO zum Senden einer Präambel ferner Folgendes beinhaltet:
während der Laufzeit eines Zufallszugriffsantwortfensters, RAR-Fensters, Überwachen eines physischen Downlink-Steuerungskanals, PDCCH, der basierend auf der RA-RNTI durch Scrambling verschlüsselt ist; und
Empfangen einer RAR-Nachricht gemäß Downlink-Steuerungsinformationen, DCI, in dem PDCCH.

4. RA-RNTI-Verarbeitungsverfahren gemäß Anspruch 3, wobei das Berechnen der RA-RNTI basierend auf einem Parameter t_id Folgendes beinhaltet:
Erhalten der RA-RNTI durch eine Berechnung gemäß der folgenden Formel: 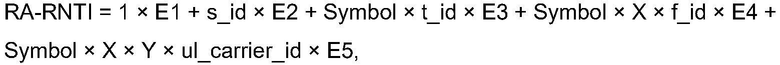 RA-RNTI = 1 × E1 + s_id × E2 + Symbol × t_id × E3 + Symbol × X × f_id × E4 + Symbol × X × Y × ul_carrier_id × E5, wobei wobei
t_id eine Nummer einer 1. Schlitzgruppe der zum Senden der Präambel belegten RO von N Schlitzgruppen ist, die durch das Gruppieren von Schlitzen innerhalb einer ersten spezifizierten Zeitlänge gemäß einer spezifischen Regel erhalten werden, und die erste spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist;
X durch eine Netzwerkseite konfiguriert wird oder X ein voreingestellter Wert ist oder X eine Quantität von Schlitzgruppen ist, die in der ersten spezifizierten Zeitlänge enthalten ist;
Y durch die Netzwerkseite konfiguriert wird oder Y ein voreingestellter Wert ist oder Y durch das Endgerät bestimmt wird oder Y eine Quantität von ROs zur Durchführung von Frequenzmultiplexierung, FDM, an einer PRACH-Ressource ist;
s_id eine Nummer eines Start-Symbols für orthogonale Frequenzmultiplexierung, Start-OFDM-Symbols, der zum Senden der Präambel belegten RO ist;
f_id eine Nummer der zum Senden der Präambel belegten RO im Frequenzbereich ist; ul_carrier_id durch die Netzwerkseite konfiguriert wird oder ul_carrier_id ein voreingestellter Wert ist oder ul_carrier_id durch das Endgerät bestimmt wird oder ul_carrier_id eine Uplink-Trägernummer ist, die zum Senden der Präambel verwendet wird;
Symbol eine Quantität von Symbolen innerhalb einer zweiten spezifizierten Zeitlänge ist und die zweite spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist; und
E1, E2, E3, E4 und E5 ganze Zahlen sind.

5. RA-RNTI-Verarbeitungsverfahren gemäß Anspruch 1, wobei das Berechnen der RA-RNTI basierend auf einem Parameter t_id Folgendes beinhaltet:
Erhalten der RA-RNTI durch eine Berechnung gemäß der folgenden Formel: 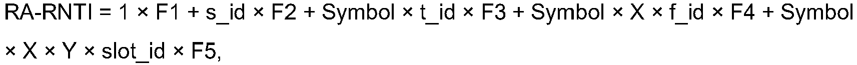 RA-RNTI = 1 × F1 + s_id × F2 + Symbol × t_id × F3 + Symbol × X × f_id × F4 + Symbol × X × Y × slot_id × F5, wobei wobei
t_id eine Nummer einer 1. Schlitzgruppe der zum Senden der Präambel belegten RO von N Schlitzgruppen ist, die durch das Gruppieren von Schlitzen innerhalb einer ersten spezifizierten Zeitlänge gemäß einer spezifischen Regel erhalten werden, und die erste spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist;
X durch eine Netzwerkseite konfiguriert wird oder X ein voreingestellter Wert ist oder X eine Quantität von Schlitzgruppen ist, die in der ersten spezifizierten Zeitlänge enthalten ist;
Y durch die Netzwerkseite konfiguriert wird oder Y ein voreingestellter Wert ist oder Y durch das Endgerät bestimmt wird oder Y eine Quantität von ROs zur Durchführung von Frequenzmultiplexierung, FDM, an einer PRACH-Ressource ist;
s_id eine Nummer eines Start-Symbols für orthogonale Frequenzmultiplexierung, Start-OFDM-Symbols, der zum Senden der Präambel belegten RO ist;
f_id eine Nummer der zum Senden der Präambel belegten RO im Frequenzbereich ist;
slot_id eine Nummer eines 1. PRACH-Schlitzes der zum Senden der Präambel belegten RO in einer Schlitzgruppe ist;
Symbol eine Quantität von Symbolen innerhalb einer zweiten spezifizierten Zeitlänge ist und die zweite spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist; und
F1, F2, F3, F4 und F5 ganze Zahlen sind.

6. RA-RNTI-Verarbeitungsverfahren gemäß Anspruch 3, wobei das Berechnen der RA-RNTI basierend auf einem Parameter t_id Folgendes beinhaltet:
Erhalten der RA-RNTI durch eine Berechnung gemäß der folgenden Formel: 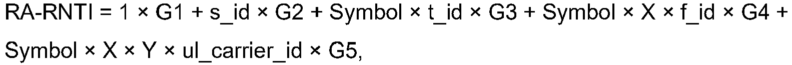 RA-RNTI = 1 × G1 + s_id × G2 + Symbol × t_id × G3 + Symbol × X × f_id × G4 + Symbol × X × Y × ul_carrier_id × G5, wobei wobei
t_id eine Nummer eines 1. PRACH-Schlitzes der zum Senden der Präambel belegten RO in einer Schlitzgruppe von N Schlitzgruppen ist, die durch das Gruppieren von Schlitzen innerhalb einer ersten spezifizierten Zeitlänge gemäß einer spezifischen Regel erhalten werden, und die erste spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist;
X durch eine Netzwerkseite konfiguriert wird oder X ein voreingestellter Wert ist oder X eine Quantität von PRACH-Schlitzen ist, die in einer Schlitzgruppe enthalten ist;
Y durch die Netzwerkseite konfiguriert wird oder Y ein voreingestellter Wert ist oder Y durch das Endgerät bestimmt wird oder Y eine Quantität von ROs zur Durchführung von Frequenzmultiplexierung, FDM, an einer PRACH-Ressource ist;
s_id eine Nummer eines Start-Symbols für orthogonale Frequenzmultiplexierung, Start-OFDM-Symbols, der zum Senden der Präambel belegten RO ist;
f_id eine Nummer der zum Senden der Präambel belegten RO im Frequenzbereich ist; ul_carrier_id durch die Netzwerkseite konfiguriert wird oder ul_carrier_id ein voreingestellter Wert ist oder ul_carrier_id durch das Endgerät bestimmt wird oder ul_carrier_id eine Uplink-Trägernummer ist, die zum Senden der Präambel verwendet wird;
Symbol eine Quantität von Symbolen innerhalb einer zweiten spezifizierten Zeitlänge ist und die zweite spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist; und
G1, G2, G3, G4 und G5 ganze Zahlen sind.

7. RA-RNTI-Verarbeitungsverfahren gemäß Anspruch 1, wobei das Berechnen der RA-RNTI basierend auf einem Parameter t_id Folgendes beinhaltet:
Erhalten der RA-RNTI durch eine Berechnung gemäß der folgenden Formel: 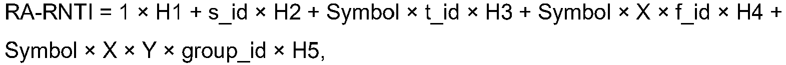 RA-RNTI = 1 × H1 + s_id × H2 + Symbol × t_id × H3 + Symbol × X × f_id × H4 + Symbol × X × Y × group_id × H5, wobei wobei
t_id eine Nummer eines 1. PRACH-Schlitzes der zum Senden der Präambel belegten RO in einer Schlitzgruppe von N Schlitzgruppen ist, die durch das Gruppieren von Schlitzen innerhalb einer ersten spezifizierten Zeitlänge gemäß einer spezifischen Regel erhalten werden, und die erste spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist;
X durch eine Netzwerkseite konfiguriert wird oder X ein voreingestellter Wert ist oder X eine Quantität von PRACH-Schlitzen ist, die in einer Schlitzgruppe enthalten ist;
Y durch die Netzwerkseite konfiguriert wird oder Y ein voreingestellter Wert ist oder Y durch das Endgerät bestimmt wird oder Y eine Quantität von ROs zur Durchführung von Frequenzmultiplexierung, FDM, an einer PRACH-Ressource ist;
s_id eine Nummer eines Start-Symbols für orthogonale Frequenzmultiplexierung, Start-OFDM-Symbols, der zum Senden der Präambel belegten RO ist;
f_id eine Nummer der zum Senden der Präambel belegten RO im Frequenzbereich ist; group_id eine Nummer einer 1. Schlitzgruppe der zum Senden der Präambel belegten RO ist;
Symbol eine Quantität von Symbolen innerhalb einer zweiten spezifizierten Zeitlänge ist und die zweite spezifizierte Zeitlänge mindestens ein Schlitz, mindestens eine Millisekunde, mindestens ein Unterrahmen, mindestens eine Zeitbereichslänge einer RO, mindestens ein Rahmen oder mindestens ein Zeitfenster ist; und
H1, H2, H3, H4 und H5 ganze Zahlen sind.

8. RA-RNTI-Verarbeitungsverfahren gemäß Anspruch 3, wobei das Empfangen einer RAR-Nachricht gemäß den DCI in dem PDCCH Folgendes beinhaltet:
Empfangen der RAR-Nachricht basierend auf einer ersten Angabe, die durch eine netzwerkseitige Vorrichtung gesendet wird, wobei die erste Angabe eine Nummer eines 1. PRACH-Schlitzes der zum Senden der Präambel belegten RO in einem Referenzschlitz angibt.

9. RA-RNTI-Verarbeitungsverfahren gemäß Anspruch 2, wobei das Gruppieren für eine Schlitzgruppe gemäß der folgenden Regel durchgeführt wird:
Schlitze innerhalb der ersten spezifizierten Zeitlänge werden gleichmäßig in N Schlitzgruppen gruppiert und jede Gruppe beinhaltet M Schlitze; die M Schlitze sind aufeinanderfolgend oder nicht aufeinanderfolgend; wenn die M Schlitze M aufeinanderfolgende Schlitze sind, gehören alle M Schlitze gemäß einer Zeitsequenz zu einer Gruppe; und wenn die M Schlitze M nicht aufeinanderfolgende Schlitze sind, sind Schlitze, die erfüllen, dass Reste beim Dividieren von Schlitzindizes durch N gleich sind, in einer gleichen Gruppe, wobei ein Schlitzindex eine Schlitznummer ist.

10. RA-RNTI-Verarbeitungsverfahren gemäß Anspruch 1, wobei das Verfahren auf einen voreingestellten Frequenzbereich und/oder einen voreingestellten Unterträgerabstand, SCS, eines physischen Zufallszugriffskanals, PRACH, angewendet wird.

11. Ein Endgerät (1000), das einen Prozessor (1010), einen Speicher (1009) und ein Programm oder eine Anweisung, das/die in dem Speicher (1009) gespeichert und auf dem Prozessor (1010) ausführbar ist, beinhaltet, wobei, wenn das Programm oder die Anweisung durch den Prozessor (1010) ausgeführt wird, die Schritte des RA-RNTI-Verarbeitungsverfahrens gemäß einem der Ansprüche 1 bis 10 implementiert werden.

## Revendications

1. Un procédé de traitement d'identité temporaire de réseau radio à accès aléatoire, RA-RNTI (*Random Access-Radio Network Temporary Identity*), réalisé par un terminal, et comprenant :
le fait de calculer (201) une RA-RNTI sur la base d'informations de ressources temps-fréquence d'une occasion d'accès aléatoire, RO (*Random Access Occasion*), pour envoyer un préambule,
dans lequel le fait de calculer (201) une RA-RNTI sur la base d'informations de ressources temps-fréquence d'une RO pour envoyer un préambule comprend :
le fait de calculer la RA-RNTI sur la base d'un paramètre t_id, dans lequel t_id est un numéro d'un 1^{er} groupe de créneaux de la RO occupée pour envoyer le préambule, ou un numéro d'un 1^{er} créneau de canal d'accès aléatoire physique, PRACH (*Physical Random Access Channel*), de la RO occupée pour envoyer le préambule dans un groupe de créneaux.

2. Le procédé de traitement de RA-RNTI selon la revendication 1, dans lequel le groupe de créneaux est obtenu par le fait de grouper des créneaux dans une première durée spécifiée selon une règle spécifique.

3. Le procédé de traitement de RA-RNTI selon la revendication 2, le procédé comprenant en outre, après le fait de calculer (201) une RA-RNTI sur la base d'informations de ressources temps-fréquence d'une RO pour envoyer un préambule :
durant le fonctionnement d'une fenêtre de réponse d'accès aléatoire, RAR (*Random Access Response*), le fait de surveiller un canal de commande de liaison descendante physique, PDCCH (*Physical Downlink Control Channel*), brouillé sur la base de la RA-RNTI ; et
le fait de recevoir un message de RAR selon des informations de commande de liaison descendante, DCI (*Downlink Control Information*), dans le PDCCH.

4. Le procédé de traitement de RA-RNTI selon la revendication 3, dans lequel le fait de calculer la RA-RNTI sur la base d'un paramètre t_id comprend :
le fait d'obtenir la RA-RNTI par le biais d'un calcul selon la formule suivante : 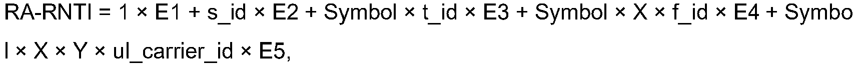 RA-RNTI = 1 × E1 + s_id × E2 + Symbol × t_id × E3 + Symbol × X × f_id × E4 + Symbo I × X × Y × ul_carrier_id × E5, dans laquelle
t_id est un numéro d'un 1^{er} groupe de créneaux de la RO occupée pour envoyer le préambule dans N groupes de créneaux qui sont obtenus par le fait de grouper des créneaux dans une première durée spécifiée selon une règle spécifique, et la première durée spécifiée est au moins un créneau, au moins une milliseconde, au moins une sous-trame, au moins une longueur de domaine temporel d'une RO, au moins une trame, ou au moins une fenêtre temporelle ;
X est configuré par un côté réseau, ou X est une valeur prédéfinie, ou X est une quantité de groupes de créneaux compris dans la première durée spécifiée ;
Y est configuré par le côté réseau, ou Y est une valeur prédéfinie, ou Y est déterminé par le terminal, ou Y est une quantité de RO pour réaliser un multiplexage par répartition de la fréquence, FDM (*Frequency Division Multiplexing*), sur une ressource de PRACH ;
s_id est un numéro d'un symbole de multiplexage par répartition orthogonale de la fréquence, OFDM (*Orthogonal Frequency Division Multiplexing*), de départ de la RO occupée pour envoyer le préambule ;
f_id est un numéro de la RO occupée pour envoyer le préambule dans un domaine fréquentiel ;
ul_carrier_id est configuré par le côté réseau, ou ul_carrier_id est une valeur prédéfinie, ou ul_carrier_id est déterminé par le terminal, ou ul_carrier_id est un numéro de porteuse de liaison montante utilisé pour envoyer le préambule ;
Symbol est une quantité de symboles dans une deuxième durée spécifiée, et la deuxième durée spécifiée est au moins un créneau, au moins une milliseconde, au moins une sous-trame, au moins une longueur de domaine temporel d'une RO, au moins une trame, ou au moins une fenêtre temporelle ; et
E1, E2, E3, E4, et E5 sont des nombres entiers.

5. Le procédé de traitement de RA-RNTI selon la revendication 1, dans lequel le fait de calculer la RA-RNTI sur la base d'un paramètre t_id comprend :
le fait d'obtenir la RA-RNTI par le biais d'un calcul selon la formule suivante : 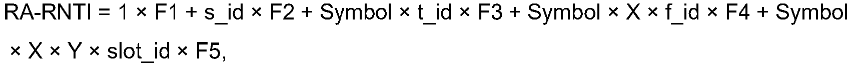 RA-RNTI = 1 × F1 + s_id × F2 + Symbol × t_id × F3 + Symbol × X × f_id × F4 + Symbol × X × Y × slot_id × F5, dans laquelle t_id est un numéro d'un 1^{er} groupe de créneaux de la RO occupée pour envoyer le 30 préambule dans N groupes de créneaux qui sont obtenus par le fait de grouper des créneaux dans une première durée spécifiée selon une règle spécifique, et la première durée spécifiée est au moins un créneau, au moins une milliseconde, au moins une sous-trame, au moins une longueur de domaine temporel d'une RO, au moins une trame, ou au moins une fenêtre temporelle ;
35 X est configuré par un côté réseau, ou X est une valeur prédéfinie, ou X est une quantité de groupes de créneaux compris dans la première durée spécifiée ;
Y est configuré par le côté réseau, ou Y est une valeur prédéfinie, ou Y est déterminé par le terminal, ou Y est une quantité de RO pour réaliser un multiplexage par répartition de la fréquence, FDM, sur une ressource de PRACH ;
s_id est un numéro d'un symbole de multiplexage par répartition orthogonale de la fréquence, OFDM, de départ de la RO occupée pour envoyer le préambule ;
f_id est un numéro de la RO occupée pour envoyer le préambule dans un domaine fréquentiel ;
slot_id est un numéro d'un 1^{er} créneau de PRACH de la RO occupée pour envoyer le préambule dans un groupe de créneaux ;
Symbol est une quantité de symboles dans une deuxième durée spécifiée, et la deuxième durée spécifiée est au moins un créneau, au moins une milliseconde, au moins une sous-trame, au moins une longueur de domaine temporel d'une RO, au moins une trame, ou au moins une fenêtre temporelle ; et
F1, F2, F3, F4, et F5 sont des nombres entiers.

6. Le procédé de traitement de RA-RNTI selon la revendication 3, dans lequel le fait de calculer la RA-RNTI sur la base d'un paramètre t_id comprend :
le fait d'obtenir la RA-RNTI par le biais d'un calcul selon la formule suivante : 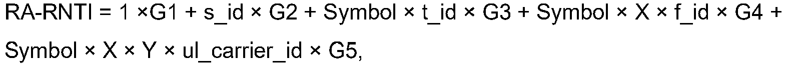 RA-RNTI = 1 ×G1 + s_id × G2 + Symbol × t_id × G3 + Symbol × X × f_id × G4 + Symbol × X × Y × ul_carrier_id × G5, dans laquelle dans laquelle
t_id est un numéro d'un 1^{er} créneau de PRACH de la RO occupée pour envoyer le préambule dans un groupe de créneaux dans N groupes de créneaux qui sont obtenus par le fait de grouper des créneaux dans une première durée spécifiée selon une règle spécifique, et la première durée spécifiée est au moins un créneau, au moins une milliseconde, au moins une sous-trame, au moins une longueur de domaine temporel d'une RO, au moins une trame, ou au moins une fenêtre temporelle ;
X est configuré par un côté réseau, ou X est une valeur prédéfinie, ou X est une quantité de créneaux de PRACH compris dans un groupe de créneaux ;
Y est configuré par le côté réseau, ou Y est une valeur prédéfinie, ou Y est déterminé par le terminal, ou Y est une quantité de RO pour réaliser un multiplexage par répartition de la fréquence, FDM, sur une ressource de PRACH ;
s_id est un numéro d'un symbole de multiplexage par répartition orthogonale de la fréquence, OFDM, de départ de la RO occupée pour envoyer le préambule ;
f_id est un numéro de la RO occupée pour envoyer le préambule dans un domaine fréquentiel ;
ul_carrier_id est configuré par le côté réseau, ou ul_carrier_id est une valeur prédéfinie, ou ul_carrier_id est déterminé par le terminal, ou ul_carrier_id est un numéro de porteuse de liaison montante utilisé pour envoyer le préambule ;
Symbol est une quantité de symboles dans une deuxième durée spécifiée, et la deuxième durée spécifiée est au moins un créneau, au moins une milliseconde, au moins une sous-trame, au moins une longueur de domaine temporel d'une RO, au moins une trame, ou au moins une fenêtre temporelle ; et
G1, G2, G3, G4, et G5 sont des nombres entiers.

7. Le procédé de traitement de RA-RNTI selon la revendication 1, dans lequel le fait de calculer la RA-RNTI sur la base d'un paramètre t_id comprend :
le fait d'obtenir la RA-RNTI par le biais d'un calcul selon la formule suivante : 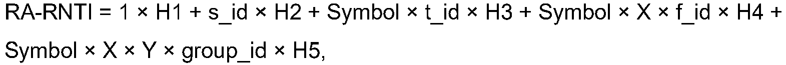 RA-RNTI = 1 × H1 + s_id × H2 + Symbol × t_id × H3 + Symbol × X × f_id × H4 + Symbol × X × Y × group_id × H5, dans laquelle dans laquelle
t_id est un numéro d'un 1^{er} créneau de PRACH de la RO occupée pour envoyer le préambule dans un groupe de créneaux dans N groupes de créneaux qui sont obtenus par le fait de grouper des créneaux dans une première durée spécifiée selon une règle spécifique, et la première durée spécifiée est au moins un créneau, au moins une milliseconde, au moins une sous-trame, au moins une longueur de domaine temporel d'une RO, au moins une trame, ou au moins une fenêtre temporelle ;
X est configuré par un côté réseau, ou X est une valeur prédéfinie, ou X est une quantité de créneaux de PRACH compris dans un groupe de créneaux ;
Y est configuré par le côté réseau, ou Y est une valeur prédéfinie, ou Y est déterminé par le terminal, ou Y est une quantité de RO pour réaliser un multiplexage par répartition de la fréquence, FDM, sur une ressource de PRACH ;
s_id est un numéro d'un symbole de multiplexage par répartition orthogonale de la fréquence, OFDM, de départ de la RO occupée pour envoyer le préambule ;
f_id est un numéro de la RO occupée pour envoyer le préambule dans un domaine fréquentiel ;
group_id est un numéro d'un 1^{er} groupe de créneaux de la RO occupée pour envoyer le préambule ;
Symbol est une quantité de symboles dans une deuxième durée spécifiée, et la deuxième durée spécifiée est au moins un créneau, au moins une milliseconde, au moins une sous-trame, au moins une longueur de domaine temporel d'une RO, au moins une trame, ou au moins une fenêtre temporelle ; et
H1, H2, H3, H4, et H5 sont des nombres entiers.

8. Le procédé de traitement de RA-RNTI selon la revendication 3, dans lequel le fait de recevoir un message de RAR selon des DCI dans le PDCCH comprend :
le fait de recevoir le message de RAR sur la base d'une première indication envoyée par un dispositif côté réseau, dans lequel la première indication indique un numéro d'un 1^{er} créneau de PRACH de la RO occupée pour envoyer le préambule dans un créneau de référence.

9. Le procédé de traitement de RA-RNTI selon la revendication 2, dans lequel le fait de grouper est réalisé pour un groupe de créneaux selon la règle suivante :
des créneaux dans la première durée spécifiée sont groupés uniformément en N groupes de créneaux, et chaque groupe comprend M créneaux ; les M créneaux sont consécutifs ou non consécutifs ; si les M créneaux sont M créneaux consécutifs, tous les M créneaux appartiennent à un groupe selon une séquence temporelle ; et si les M créneaux sont M créneaux non consécutifs, des créneaux satisfaisant au fait que les restes de la division des indices de créneau par N sont égaux sont dans un même groupe, dans lequel un indice de créneau est un numéro de créneau.

10. Le procédé de traitement de RA-RNTI selon la revendication 1, le procédé étant appliqué à une gamme de fréquences prédéfinie et/ou à un espacement de sous-porteuses, SCS (*Subcarrier Spacing*), de canal d'accès aléatoire physique, PRACH, prédéfini.

11. Un terminal (1000), comprenant un processeur (1010), une mémoire (1009), et un programme ou une instruction qui est stocké(e) dans la mémoire (1009) et exécutable sur le processeur (1010), dans lequel lorsque le programme ou l'instruction est exécuté(e) par le processeur (1010), les étapes du procédé de traitement de RA-RNTI selon l'une quelconque des revendications 1 à 10 sont mises en œuvre.
